# EUROPEAN PATENT SPECIFICATION

(11) **EP 3 306 720 B1**
(45) Date of publication and mention of the grant of the patent: **22.05.2019**
(21) Application number: 16802814.0
(22) Date of filing: 01.06.2016
(51) Int. Cl.: H01M 8/02, C02F 3/28, H01M 4/86, H01M 8/16, H01M 8/10, C02F 3/00

(54) **ELECTRODE ASSEMBLY, AND MICROBIAL FUEL CELL AND WATER TREATMENT DEVICE USING SAME**
ELEKTRODENANORDNUNG UND MIKROBIELLE BRENNSTOFFZELLE UND WASSERBEHANDLUNGSVORRICHTUNG DAMIT
ASSEMBLAGE À ÉLECTRODE, ET PILE À COMBUSTIBLE MICROBIENNE ET DISPOSITIF DE TRAITEMENT DES EAUX L'UTILISANT

(30) Priority: 05.06.2015 JP 2015114565
(43) Date of publication of application: 11.04.2018
(73) Proprietor: Panasonic Corporation, Kadoma-shi, Osaka 571-8501 (JP)
(72) Inventor: YOSHIKAWA, Naoki, Osaka-shi, Osaka 540-6207 (JP); KAMAI, Ryo, Osaka -shi, Osaka 540-6207 (JP); KITADE, Yuuki, Osaka.shi , Osaka 540-6207 (JP); TANI, Michihiko, Osaka-shi, Osaka 540-6207 (JP)
(74) Representative: Müller-Boré & Partner Patentanwälte PartG mbB
(86) International application number: PCT/JP2016/002658
(87) International publication number: WO 2016/194374

(56) References cited:
- WO-A1-2013/005814
- WO-A1-2015/050162
- WO-A1-2015/068620
- JP-A- 2008 288 198

## Description

The present invention relates to an electrode assembly, and a microbial fuel cell and a water treatment device, which use the same. More specifically, the present invention relates to an electrode assembly capable of purifying wastewater and generating electrical energy, and to a microbial fuel cell and a water treatment device, which use the electrode assembly.

The microbial fuel cell is a device that converts chemical energy of organic matter, which is contained in wastewater, into electrical energy by a catalytic action (metabolic reaction, biochemical conversion) of microorganisms, and meanwhile, oxidizes and decomposes the organic matter. That is, the microbial fuel cell directly produces electrical energy from the organic matter by such an action of the microorganisms. Therefore, the microbial fuel cell can be expected to enhance energy recovery efficiency as compared with a conventional energy recovery system utilizing a step of converting organic matter to biogas. Moreover, the microbial fuel cell can be used not only for power generation but also for wastewater treatment and organic waste treatment, as an attached facility for the organic Waste treatment, and so on.

The microbial fuel cell includes: a negative electrode that holds microorganisms; and a positive electrode that contacts an oxidant. As such a microbial fuel cell, heretofore, there has been disclosed one, which includes: a negative electrode, which is immersed in an organic substrate to support anaerobic microorganisms; and a hermetically sealed-type hollow cassette having: an outer shell, at least a part of which is formed of an ion permeable diaphragm; and an inlet/outlet (for example, refer to Patent Literature 1). Moreover, the microbial fuel cell includes a positive electrode that is enclosed in the hollow cassette together with an electrolysis solution or coupled to an inside of the diaphragm of the cassette to be inserted into the organic substrate. Then, it is also disclosed to supply oxygen into the cassette via the outlet/inlet, and further to take out electricity that electrically connects the negative electrode and the positive electrode to each other.

Patent Literature 1: Japanese Unexamined Patent Application Publication No. 2009-93861

As mentioned above, the microbial fuel cell of Patent Literature 1 uses the hollow cassette, and stretches the diaphragm, thereby ensuring a hollow thereof. However, when such a microbial fuel cell as described above is enlarged, the diaphragm is pressed from a liquid phase side to a gas phase side by water pressure, and there occurs a phenomenon that the diaphragm is bent toward an inside of the hollow. As a result, a space for sufficiently supplying oxygen to the positive electrode is not ensured in the inside of the hollow cassette, and accordingly, there has been a problem that an amount of oxygen supplied to the positive electrode is reduced, resulting in deterioration of battery characteristics.

The present invention has been made in consideration of such a problem as described above, which is inherent in the prior art. Then, it is an object of the present invention to provide an electrode assembly capable of sufficiently supplying oxygen to the positive electrode and suppressing the deterioration of the battery characteristics, and to provide a microbial fuel cell and a water treatment device, which use the electrode assembly.

In order to solve the above-described problem, an electrode assembly according to a first aspect of the present invention includes a hollow member having: a hollow portion; an oxygen supply portion that supplies oxygen to the hollow portion; and an oxygen permeable portion that allows permeation of oxygen supplied to the hollow portion. Moreover, the electrode assembly includes: an electrode that is provided on an outside of the hollow member in the oxygen permeable portion and is composed by laminating a water-repellent layer having oxygen permeability and an electrically conductive layer on each other from the oxygen permeable portion side; and a buffer member that is provided in the hollow portion and has pressure resistance. Then, the electrode assembly has air permeability from the oxygen supply portion to the oxygen permeable portion.

A microbial fuel cell according to a second aspect of the present invention includes: the electrode assembly; and a negative electrode that supports microorganisms. The electrode in the electrode assembly is a positive electrode.

A water treatment device according to a third aspect of the present invention includes: the electrode assembly; and a negative electrode that supports microorganisms. The electrode in the electrode assembly is a positive electrode.
Fig. 1 is a perspective view showing an example of a hollow member according to an embodiment of the present invention.
Fig. 2 is a perspective view showing an example of a buffer member according to the embodiment of the present invention.
Fig. 3 is a perspective view showing a state in which the hollow member and the buffer member are combined with each other.
Fig. 4 is a perspective view showing an example of an electrode assembly according to the embodiment of the present invention in an exploded state.
Figs. 5(a) to 5(c) are plan views showing electrode assemblies according to the embodiment of the present invention.
Fig. 6 is a perspective view showing another example of the electrode assembly according to the embodiment of the present invention in an exploded state.
Fig. 7 is a perspective view showing still another example of the electrode assembly according to the embodiment of the present invention in an exploded state.
Figs. 8(a) and 8(b) are schematic views showing yet another example of the electrode assembly according to the embodiment of the present invention: Fig. 8(a) is a perspective view of the electrode assembly; and Fig. 8(b) is a plan view of the electrode assembly.
Fig. 9 is an exploded perspective view showing a state in which oxygen permeable layers are combined with electrodes of the electrode assembly according to the embodiment of the present invention.
Fig. 10 is a perspective view showing an example of a microbial fuel cell according to the embodiment of the present invention.
Fig. 11 is a cross-sectional view taken along a line A-A in Fig. 10.
Fig. 12 is a perspective view showing a state in which a buffer member according to Embodiment 1 is combined with the hollow member.
Fig. 13 is a perspective view showing an electrode assembly, which uses the buffer member according to Embodiment 1 and the hollow member, in an exploded state.
Fig. 14 is a perspective view showing a state in which the buffer member according to Embodiment 1 is combined with the hollow member.
Fig. 15 is a perspective view showing an electrode assembly, which uses the buffer member according to Embodiment 1 and the hollow member, in an exploded state.
Figs. 16(a) and 16(b) are schematic views showing an example of a manufacturing method of the buffer member according to Embodiment 1.
Figs. 17(a) and 17(b) are schematic views showing another example of the manufacturing method of the buffer member according to the Embodiment 1.
Figs. 18(a) to 18(c) are schematic views showing still another example of the manufacturing method of the buffer member according to the Embodiment 1.
Figs. 19(a) to 19(c) show an example of a buffer member according to Embodiment 2: Fig. 19(a) is a perspective view of the buffer member according to the Embodiment 2 in an exploded state; Fig. 19(b) is a side view of the buffer member; and FIG. 19(c) is a perspective view showing gap making posts.
Figs. 20(a) and 20(b) show another example of the buffer member according to the Embodiment 2: Fig. 20(a) is a perspective view of the buffer member according to the Embodiment 2 in an exploded state; and Fig. 20(b) is a side view of the buffer member.
Fig. 21 is a perspective view showing an example of a buffer member according to Embodiment 3.
Figs. 22(a) and 22(b) show another example of the buffer member according to the Embodiment 3: Fig. 22(a) is a perspective view showing a state before a plurality of lattice materials are combined with one another; and Fig. 22(b) is a plan view showing a state in which the plurality of lattice materials are combined with one another.
Figs. 23(a) and 23(b) show an example of a buffer member according to Embodiment 4: Fig. 23(a) is a perspective view showing the buffer member according to the Embodiment 4 in an exploded state; and Fig. 23(b) is an enlarged view of the buffer member.
Fig. 24 is a perspective view showing an example of a lattice material that composes the buffer member according to the Embodiment 4.

Hereinafter, a description will be made in detail of an electrode assembly according to this embodiment, and a microbial fuel cell and a water treatment device, which use the electrode assembly. Note that dimensional ratios in the drawings are exaggerated for convenience of explanation, and are sometimes different from actual ratios.

### [Electrode assembly]

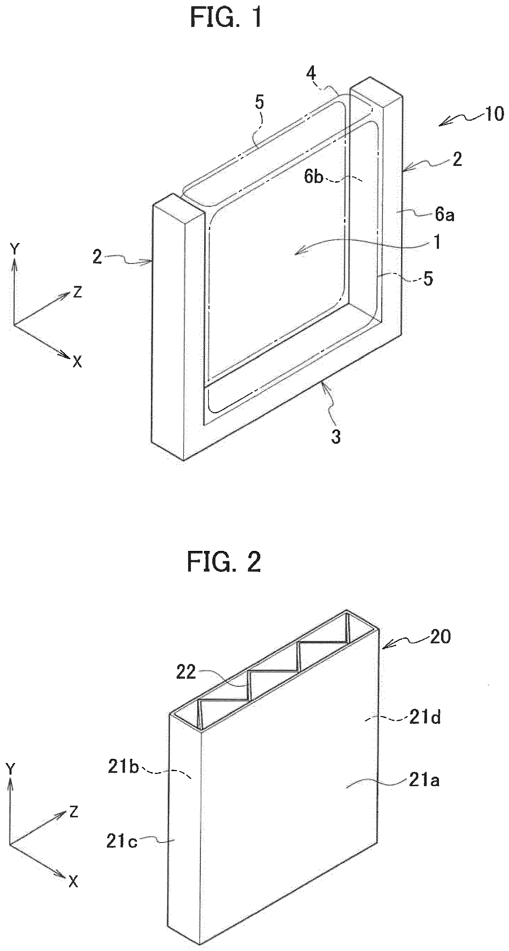

As shown in Fig. 1 to Fig. 3, an electrode assembly 100 according to this embodiment includes: a hollow member 10 having a hollow portion 1 in an inside thereof; and a buffer member 20 provided in the hollow portion 1. As shown in Fig. 1, the hollow member 10 is a substantially U-shaped frame member, in which an upper portion is open. That is, the hollow member 10 is a frame member in which bottoms of two first columnar members 2 are coupled to each other by a second columnar member 3, and the hollow portion 1 is formed in an inner space surrounded by the first columnar members 2 and the second columnar member 3. Then, the hollow member 10 includes: an oxygen supply portion 4 that supplies oxygen to the hollow portion 1; and oxygen permeable portions 5 which allow permeation of oxygen supplied to the hollow portion 1. Note that, in Fig. 1, the oxygen supply portion 4 is an opening provided on an upper face of the hollow member 10, and the oxygen permeable portions 5 are openings provided on a right side face 6a and left side face 6b of the hollow member 10.

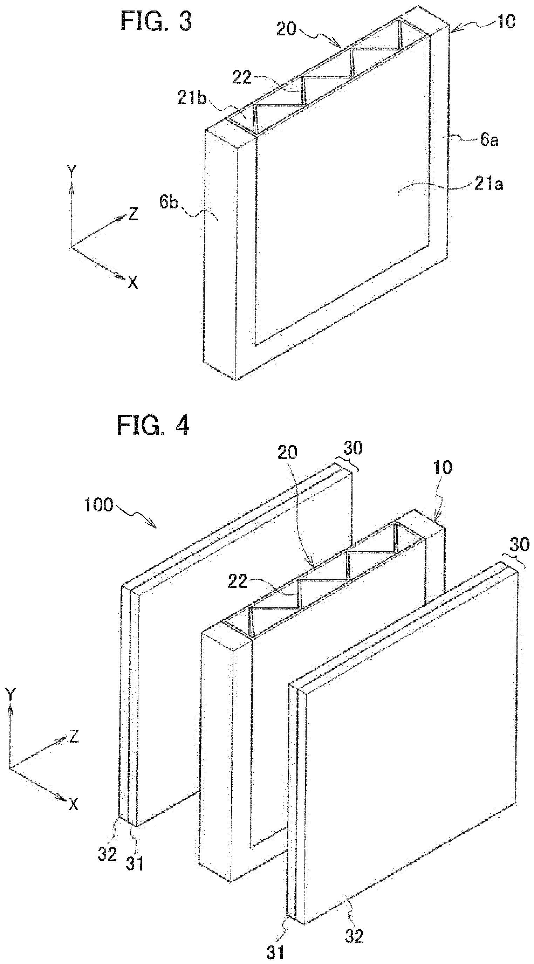

The buffer member 20 has a rectangular parallelepiped shape, and includes a right sidewall 21a, a left sidewall 21b, a front wall 21c and a rear wall 21d, which form an inner space thereof. An upper face of the buffer member 20 is opened so that oxygen (air) can be ventilated therethrough. Then, as shown in Fig. 3, the buffer member 20 is disposed in the hollow portion 1 of the hollow member 10. Note that, when the buffer member 20 is disposed in the inside of the hollow member 10, it is preferable that the right side face 6a of the hollow member 10 and the right sidewall 21a of the buffer member 20 be substantially flush with each other, and it is preferable that the left side face 6b of the hollow member 10 and the left sidewall 21b of the buffer member 20 be substantially flush with each other.

As shown in Fig. 4, the electrode assembly 100 according to this embodiment includes electrodes 30 provided outside of the hollow member 10 in the oxygen permeable portion 5. Each of the electrodes 30 is composed in such a manner that a water-repellent layer 31 having oxygen permeability and an electrically conductive layer 32 are laminated on each other from the oxygen permeable portion 5 side. The right side face 6a of the hollow member 10 is joined to an outer peripheral portion of the water-repellent layer 31 of the electrode 30. Therefore, as described later, when the electrode assembly 100 is immersed in an electrolysis solution, the electrolysis solution can be suppressed from flowing into the inner space of the hollow member 10 from a joint portion between the outer peripheral portion of the water-repellent layer 31 and the right side face 6a.

In the electrode assembly 100, oxygen (air) is supplied from the oxygen supply portion 4 of the hollow member 10 to the inner space of the buffer member 20. Then, as described later, at least the right sidewall 21a and left sidewall 21b of the buffer member 20 has oxygen permeability. Therefore, the oxygen supplied from the oxygen supply portion 4 to the inner space of the buffer member 20 is supplied to the water-repellent layer 31 of the electrode 30 through the right sidewall 21a and left sidewall 21b of the buffer member 20 and the oxygen permeable portion 5 of the hollow member 10. That is, in this embodiment, air permeability is provided from the oxygen supply portion 4 of the hollow member 10 to the oxygen permeable portion 5 thereof.

As described above, in the electrode assembly 100 of this embodiment, the buffer member 20 is disposed in the inner space of the hollow member 10. Therefore, even if the electrode assembly 100 is immersed in the electrolysis solution, and a water pressure is applied to the electrode 30, the electrode 30 is suppressed from being bent to the inner space of the hollow member 10 since the electrode 30 is held by the buffer member 20. As a result, the air permeability from the oxygen supply portion 4 of the hollow member 10 to the oxygen permeable portion 5 thereof is sufficiently ensured, and accordingly, it becomes possible to enhance an oxygen supply capability to the water-repellent layer 31 of the electrode 30.

In the electrode assembly 100, it is preferable that ISO air permeance from the oxygen supply portion 4 to the oxygen permeable portion 5 be 1×10⁻⁵ µm/Pa·s to 100 µm/Pa·s. That is, it is preferable that the ISO air permeance from the oxygen supply portion 4 through the buffer member 20 and the oxygen permeable portion 5 to a surface of the water-repellent layer 31 of the electrode 30 be within the above-described range. The air permeance is an average flow rate of the air that passes per unit area, unit pressure difference and unit time, and the higher a numeric value thereof is, the easier the air is to pass. The electrode assembly 100 has the air permeance within such a range as described above, whereby sufficient oxygen can be supplied to the water-repellent layer 31, and it becomes possible to realize a microbial fuel cell and a water treatment device, which have stable performance.

Specifically, the ISO air permeance of the electrode assembly 100 is 1×10⁻⁵ µm/Pa·s or more, whereby the oxygen permeability is enhanced, and a contact ratio of oxygen with the water-repellent layer 31 and the electrically conductive layer 32 can be enhanced. Incidentally, it is preferable that the ISO air permeance of the electrode assembly 100 be high, and an upper limit of the ISO air permeance is not particularly limited; however, may be 100 µm/Pa·s, for example. The ISO air permeance from the oxygen supply portion 4 to the oxygen permeable portion 5 is preferably 2×10⁻⁵ µm/Pa·s or more, more preferably 7.9×10⁻⁵ µm/Pa·s or more, and particularly preferably 2.9×10⁻⁴ µm/Pa·s or more. Note that the ISO air permeance of the electrode assembly 100 can be measured according to Japanese Industrial Standards JIS P8117: 2009 (Paper and board - Determination of air performance and air resistance (medium range) - Gurley method).

In the electrode assembly 100, it is preferable that compressive strength of a face thereof on which the electrode 30 is provided be 0.01 kgf/cm² to 10 kgf/cm². Specifically, in the case of the electrode assembly 100 shown in Fig. 4, it is preferable that compressive strength of the right sidewall 21a and the left sidewall 21b in the buffer member 20, on each of which the electrode 30 is laminated, be 0.01 kgf/cm² to 10 kgf/cm². The compressive strength of the electrode assembly 100 is within this range, whereby, even when the electrode assembly 100 is enlarged to result in application of a large water pressure to the electrode 30, the electrode 30 is suppressed from being bent, a planar state thereof is held, and it becomes possible to maintain high oxygen permeability. Note that the compressive strength is a value obtained by dividing a compressive load at the time when a material is deformed or broken upon receiving compressive force by a cross-sectional area of the material. Then, the compressive strength in this specification indicates a compressive stress reached when relative deformation is within 10% according to ISO 844: 2004 defined by the International Organization for Standardization. Therefore, the compressive strength of the face of the electrode assembly 100, on which the electrode 30 is provided, can be measured according to ISO 844: 2004.

As mentioned above, the buffer member 20 has a rectangular parallelepiped shape, and in the buffer member 20, the upper face is open in order to ensure the oxygen permeability, and further, the inner space is formed of the right sidewall 21a, the left sidewall 21b, the front wall 21c, and the rear wall 21d. Then, in order to further enhance the compressive strength of the buffer member 20, a support member 22 may be provided in the inner space of the buffer member 20. The support member 22 is provided, and thereby supports and reinforces the space between the right sidewall 21a and left sidewall 21b of the buffer member 20, which are opposed to the electrodes 30, and accordingly, it becomes possible to enhance the above-mentioned compressive strength, and to further suppress the deformation of the electrodes 30.

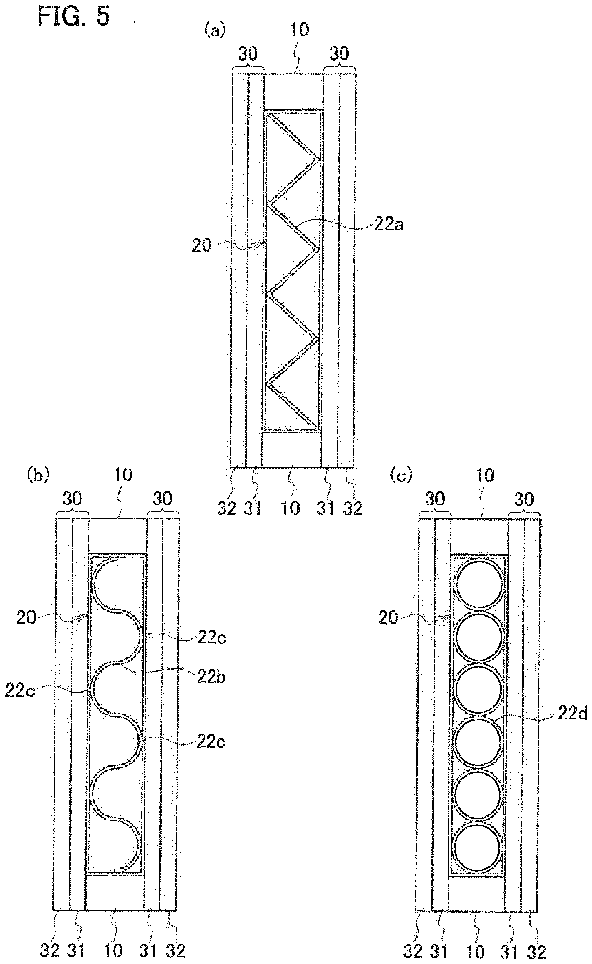

A shape of the support member 22 is not particularly limited as long as the compressive strength of the buffer member 20 can be enhanced. Specifically, as shown in Fig. 5(a), it is preferable that the buffer member 20 include a plate member 22a in the inside thereof, and that a cross-sectional shape of the buffer member 20, which is taken along a lamination direction X of the hollow member 10 and the electrode 30, be truss-like. That is, it is preferable that the support member 22 be composed of the plate member 22a, and that a truss structure be formed of the plate member 22a, and of the right sidewall 21a, left sidewall 21b, front wall 21c and rear wall 21d of the buffer member 20. Such a truss structure, in which a triangle is adopted as a base unit, and a plurality of the triangles are combined with one another, is formed, whereby stability of the buffer member 20 is enhanced, and it becomes possible to further enhance the compressive strength thereof.

As shown in Fig. 5(b), it is also preferable that the buffer member 20 include a plate member 22b in the inside thereof, and that the cross-sectional shape of the buffer member 20, which is taken along the lamination direction X of the hollow member 10 and the electrode 30, be corrugated. That is, the support member 22 is composed of such a corrugated plate member 22b, and furthermore, vertices 22c of the plate member 22 are in contact with the right sidewall 21a and left sidewall 21b of the buffer member 20. Such a corrugated support member 22 is also provided, whereby the stability of the buffer member 20 is enhanced, and it becomes possible to further enhance the compressive strength.

Moreover, as shown in Fig. 5(c), it is also preferable that the buffer member 20 include one or more cylindrical members. That is, the support member 22 is composed of the cylindrical members 22d, which are cylindrical, and further, such a plurality of the cylindrical members 22d are arranged so at to contact the right sidewall 21a, left sidewall 21b, front wall 21c and rear wall 21d of the buffer member 20. As described above, the plurality of cylindrical members 22d are also arranged, whereby the stability of the buffer member 20 is enhanced, and it becomes possible to further enhance the compressive strength.

As shown in Fig. 2 to Fig. 4, the support member 22 may be provided in the entire inside of the buffer member 20 from the upper face of the buffer member 20 to the bottom face thereof along a vertical direction Y perpendicular to the lamination direction X of the hollow member 10 and the electrodes 30. Moreover, the support member 22 may be provided only in central portions of the upper face and bottom face of the buffer member 20 in the vertical direction Y. Furthermore, the support member 22 may be provided in the entire inside of the buffer member 20 from the front wall 21c of the buffer member 20 to the rear wall 21d thereof along a depth direction Z perpendicular to the lamination direction X and the vertical direction Y. Moreover, the support member 22 may be provided only in central portions of the front wall 21c and rear wall 21d of the buffer member 20 in the depth direction Z.

In each of Figs. 5(a) to 5(c), a plate member that composes the support member 22 is disposed along the vertical direction Y. That is, the plate member is disposed so that a cross section thereof along an XZ plane can become truss-like, corrugated or circular. However, the plate member that composes the support member 22 may be disposed along the depth direction Z. That is, the plate member may also be disposed so that a cross section thereof along an XY plane can become truss-like, corrugated or circular.

A material of the member that composes the buffer member 20 is not particularly limited; however, at least one selected from the group consisting of, for example, resin, metal, glass and a carbon material can be used. Moreover, as the resin, at least one selected from the group consisting of polystyrene, polyethylene, polypropylene, polyvinyl chloride and polycarbonate can be used. Furthermore, as the metal, at least either one of stainless steel and aluminum can be used.

Such a shape of the member that composes the buffer member 20 is not particularly limited, either. However, as mentioned above, it is necessary for the electrode assembly 100 of this embodiment to have air permeability from the oxygen supply portion 4 to the oxygen permeable portion 5 in a state in which the buffer member 20 is inserted into the hollow portion 1 of the hollow member 10. Therefore, it is also necessary for the buffer member 20 itself to have high air permeability, and accordingly, it is preferable that the buffer member 20 be composed of a flat plate having a plurality of pores. Moreover, it is also preferable that the buffer member 20 be composed of a mesh structure having a plurality of pores. Furthermore, it is preferable that the plurality of pores of the buffer member 20 be formed at a constant pitch. However, the buffer member 20 is not limited to these configurations, and for example, may have a structure in which a part of the flat plate is penetrated to a large extent.

Note that it is necessary for the electrode assembly 100 to have air permeability from the oxygen supply portion 4 to the oxygen permeable portion 5. Therefore, it is preferable that, in the buffer member 20, pores be formed on at least the right sidewall 21a and the left sidewall 21b, which are opposed to the electrode 30. Then, the pores do not have to be formed in the front wall 21c and the rear wall 21d, which are not opposed to the electrode 30. A material that composes the support member 22 and a shape thereof are not particularly limited, either; however, the material and the shape can be set similar to those of the buffer member 20.

In the electrode assembly 100 according to this embodiment, as shown in Fig. 1 to Fig. 4, the hollow member 10 is such a U-shaped frame member in which the bottoms of the two first columnar members 2 are coupled to each other by the second columnar member 3. Then, the upper face of the hollow member 10 is open, in which the oxygen supply portion 4 is formed. However, the electrode assembly of this embodiment is not limited to this aspect.

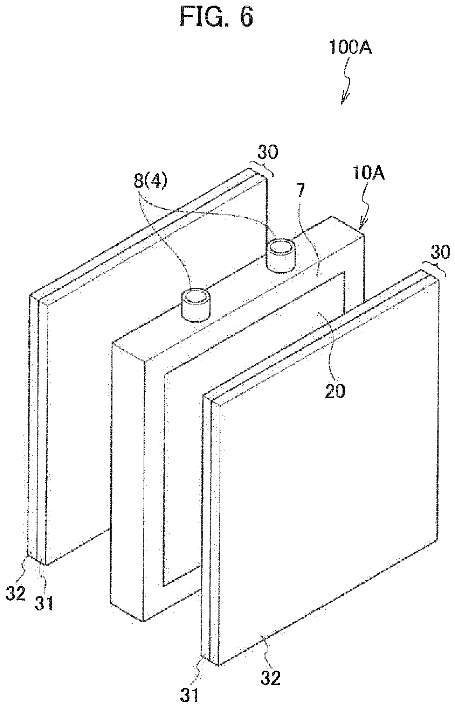

For example, as an electrode assembly 100A, it is also preferable to use a hollow member 10A as shown in Fig. 6. Specifically, as the hollow member 10A, it is also preferable to use a structure in which upper portions of the frame member having the bottoms of the two first columnar members 2 coupled to each other by the second columnar member 3 are coupled to each other by a third columnar member 7. Then, ventilation pipes 8 are provided in the third columnar member 7, oxygen (air) is supplied to the buffer member 20 through the ventilation pipes 8, and the air after the reaction is further discharged. In this case, such a configuration in which oxygen is supplied through the ventilation pipe 8 from the outside by a pump can be adopted, and accordingly, it becomes possible to further enhance the air permeability in the inside of the electrode assembly 100A. Note that, in the electrode assembly 100A, the oxygen supply portion 4 of the hollow member 10 is the ventilation pipe 8.

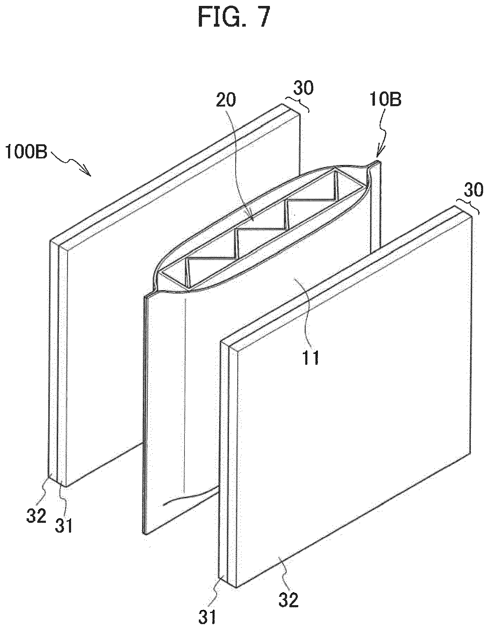

Moreover, as an electrode assembly 100B, it is also preferable to use a hollow member 10B as shown in Fig. 7. Specifically, the hollow member 10B is a member, which is formed by molding an oxygen permeable membrane into a bag shape, and has a hollow portion in an inside thereof. Then, the buffer member 20 is inserted into the hollow portion, and the electrodes 30 are provided on side faces 11 of the hollow member 10B. Such a bag-like hollow member 10B as described above is used, whereby a configuration of the hollow member can be simplified. Incidentally, it is preferable that the side faces 11 of the hollow member 10B have pores in order to ensure the oxygen permeability. Moreover, in the electrode assembly 100B, the oxygen supply portion 4 of the hollow member 10B is an opening provided in an upper portion thereof, and the oxygen permeable portion 5 is the pores provided in the side faces 11.

A material that composes the bag-like hollow member 10B is not particularly limited; however, in a similar way to the buffer member 20, at least one selected from the group consisting of, for example, resin, metal, and a carbon material can be used. Moreover, a shape of the member that composes the hollow member 10B is not particularly limited, either; however, for example, the hollow member 10B may be composed of a thin film having a plurality of pores, or may be composed of a mesh structure having a plurality of pores.

As shown in Fig. 1 and Fig. 6, in this embodiment, it is preferable that the hollow member have a rectangular parallelepiped shape, and that the oxygen supply portion be an opening portion provided on one face of the hollow member. That is, as shown in Fig. 1 and Fig. 6, it is preferable that each of the hollow members 10 and 10A have the hollow portion 1 in the inside thereof, and that the opening portion be formed on the upper face thereof. However, this embodiment is not limited to this aspect, and it is also preferable that, for example, the hollow member be cylindrical, and that the oxygen supply portion be the opening portion provided on one face of the hollow member.

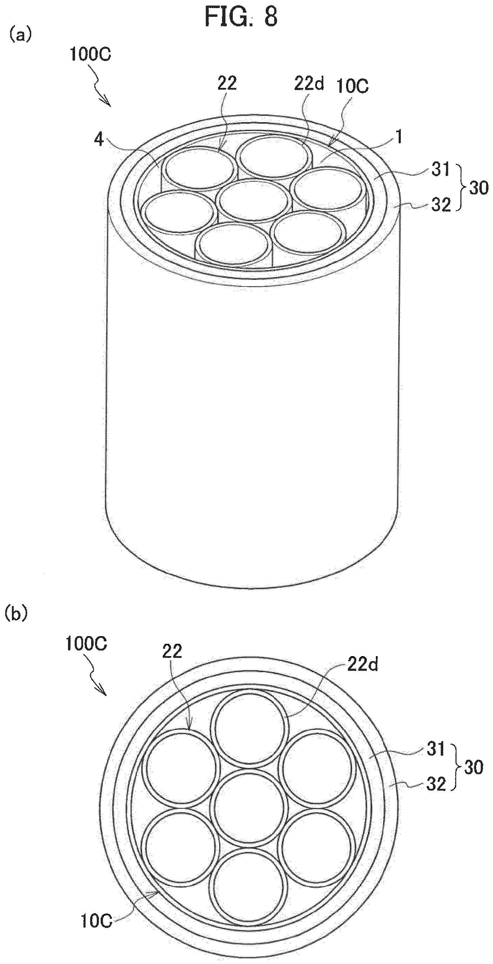

Specifically, as shown in Fig. 8, in an electrode assembly 100C, a hollow member 10C is composed of a cylinder having the hollow portion 1 in an inside thereof, and further, in the hollow portion 1, a plurality of support members 22 composed of cylindrical members 22d, which are cylindrical, are arranged. Then, the support members 22 are composed in such a manner that six support members 22d are gathered concentrically around one cylindrical member 22d. Moreover, the electrode 30 is laminated on the entire circumference of the hollow member 10C. Note that, in the electrode assembly 100C, an oxygen supply portion 4 of the hollow member 10C is an opening provided in an upper face thereof, and the oxygen permeable portion 5 is pores provided in a side face of the hollow member 10C.

A material that composes the cylindrical hollow member 10C and the support members 22, which are cylindrical, is not particularly limited; however, in a similar way to the buffer member 20, at least one selected from the group consisting of, for example, resin, metal, glass and a carbon material can be used. Moreover, a shape of the members which compose the hollow member 10C and the support members 22 is not particularly limited, either; however, for example, each of the hollow member 10C and the support members 22 may be composed of a thin film having a plurality of pores, or may be composed of a mesh structure having a plurality of pores.

In this embodiment, the electrode 30 is composed of a gas diffusion electrode including: the water-repellent layer 31 having oxygen permeability; and the electrically conductive layer 32 laminated on the water-repellent layer 31. Such a gas diffusion electrode as described above is used, whereby it becomes possible to easily supply oxygen in the gas phase. Moreover, there are advantages as below, for example, as compared with the case where dissolved oxygen dissolved in water is supplied to the electrode 30. When the dissolved oxygen is supplied to the electrode 30, there is a problem that oxidation and power generation of an organic substance contained in a liquid to be treated (electrolysis solution) such as wastewater are determined by a diffusion rate of the dissolved oxygen. In contrast, a diffusion rate of the oxygen in the gas phase is extremely higher than the diffusion rate of the dissolved oxygen, and accordingly, the oxidation and power generation of the organic substance can be efficiently performed. Hence, it becomes possible to enhance an output of the fuel cell.

The water-repellent layer 31 is a layer having both water repellency and gas permeability. The water-repellent layer 31 is configured so as, while satisfactorily separating a gas phase and a liquid phase in an electrochemical system in the microbial fuel cell from each other, to allow movement of gas, which shifts from the gas phase to the liquid phase. That is, the water-repellent layer 31 is configured to allow permeation of oxygen in the gas phase, and to move the oxygen to the electrically conductive layer 32. It is preferable that the water-repellent layer 31 as described above be porous. In this case, the water-repellent layer 31 can have high gas permeability.

It is preferable that the electrically conductive layer 32 include, for example, a porous electroconductive material and a catalyst supported on the electroconductive material. Note that the electrically conductive layer 32 may be composed of a porous catalyst having electric conductivity.

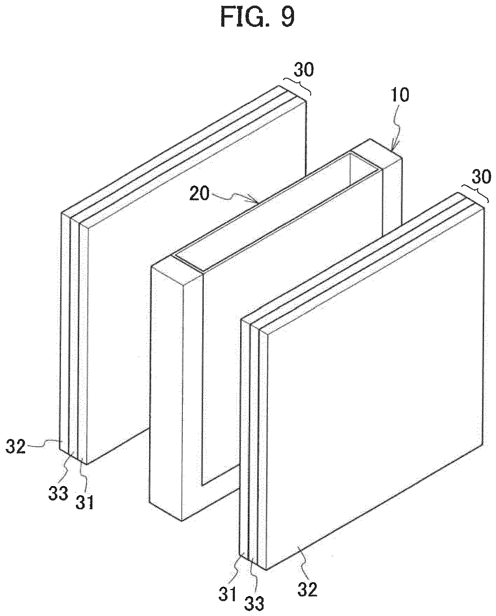

Moreover, as shown in Fig. 9, it is preferable that each of the electrodes 30 further include an oxygen permeable layer 33, which is disposed between the water-repellent layer 31 and the electrically conductive layer 32, and has oxygen permeability. Since the oxygen permeable layer 33 has oxygen permeability, the oxygen permeable layer 33 has a function to supply oxygen to the electrically conductive layer 32.

A description will be made more in detail of the water-repellent layer 31, electrically conductive layer 32 and oxygen permeable layer 33 of the electrode 30 in this embodiment.

The water-repellent layer 31 diffuses oxygen, and supplies oxygen substantially uniformly to the electrically conductive layer 32. Therefore, it is preferable that the water-repellent layer 31 be a porous body so that the oxygen can be diffused. Moreover, it is preferable that the water-repellent layer 31 have water repellency. The water-repellent layer 31 has water repellency, whereby a decrease of oxygen diffusibility can be suppressed, which may result from the fact that such pores of the porous body are closed due to dew condensation and the like. Moreover, as will be described later, when the electrode assembly 100 is used for the microbial fuel cell or the water treatment device, it becomes difficult for the liquid phase to penetrate the inside of the water-repellent layer 31, and it becomes easy for the water-repellent layer 31 to contact oxygen.

A material that composes the water-repellent layer 31 is not particularly limited as long as the material can diffuse oxygen. As a material that composes the water-repellent layer 31, for example, at least one selected from the group consisting of polyethylene, polypropylene, nylon, polytetrafluoroethylene can be used. Each of these materials can easily form the porous body, and further, also has high water repellency, and accordingly, can enhance the gas diffusibility by suppressing the pores from being closed. Moreover, it is preferable that the water-repellent layer 31 be a nonwoven fabric or a film, which is made of any of the above-described materials. Note that, when the water-repellent layer 31 is composed of the film of any of the above-described materials, it is preferable that a plurality of through holes be provided in the lamination direction X of the water-repellent layer 31 and the electrically conductive layer 32.

Moreover, in order to enhance the water repellency, the water-repellent layer 31 may be subjected to water-repellent treatment by using a water-repellent agent as necessary. Specifically, a water-repellent agent such as polytetrafluoroethylene (PTFE) may be adhered to the porous body that composes the water-repellent layer 31, and may enhance the water repellency thereof.

The electrically conductive layer 32 can be configured to include a porous electroconductive material and a catalyst supported on the electroconductive material. As the electroconductive material in the electrically conductive layer 32, for example, at least one material selected from the group consisting of a carbon-based substance, an electroconductive polymer, a semiconductor and metal can be used. As an example of the carbon-based substance, at least one selected from the group consisting of carbon paper, a carbon cloth and a graphite sheet can be used. Moreover, the electrically conductive layer 32 may be composed of one selected from the group consisting of the carbon paper, the carbon cloth and the graphite sheet, and may be a laminated body formed by laminating a plurality of these on one another. Such carbon paper that is a nonwoven fabric of carbon fiber, such a carbon cloth that is woven fabric of carbon fiber, and such a graphite sheet made of graphite have high corrosion resistance and electrical resistivity equal to a metal material, and accordingly, it becomes possible to achieve both of durability and electric conductivity of the electrode.

The electroconductive polymer is a generic name of high molecular compounds having electric conductivity. Examples of the electroconductive polymer include: polymers of single monomers composed of, as elements, aniline, amino phenol, diaminophenol, pyrrole, thiophene, paraphenylene, fluorene, furan, acetylene, and derivatives thereof; and polymers of two or more types of the monomers. Specific examples of the electroconductive polymer include polyaniline, polyaminophenol, polydiaminophenol, polypyrrole, polythiophene, polyparaphenylene, polyfluorene, polyfuran, polyacetylene and the like. Examples of such a metal-made electroconductive material include electroconductive metals such as aluminum, copper, stainless steel, nickel and titanium. Considering availability, cost, corrosion resistance, durability and the like, it is preferable that the electroconductive material be the carbon-based substance.

Moreover, it is preferable that a shape of the electroconductive material be powdery or fibrous. Furthermore, the electroconductive material may be supported on a supporting body. The supporting body means a member that itself has rigidity and can impart a constant shape to the gas diffusion electrode. The supporting body may be either a non-conductive body or an electrically conductive body. When the supporting body is the non-conductive body, examples of the supporting body include glass pieces, plastics, synthetic rubbers, ceramics, paper subjected to waterproof or water-repellent treatment, plant pieces such as wood pieces, animal pieces such as bone pieces and shells, and the like. Examples of a supporting body having a porous structure include porous ceramics, porous plastics, sponge and the like. When the supporting body is the electrically conductive body, examples of the supporting body include carbon-based substances such as carbon paper, carbon fiber and a carbon rod, metals, electroconductive polymers, and the like. When the supporting body is the electrically conductive body, such an electroconductive material that supports the carbon-based material is disposed on a surface of the supporting body, whereby the supporting body can also function as a current collector.

Here, it is preferable that the catalyst in the electrically conductive layer 32 be a carbon-based material doped with metal atoms. The metal atoms are not particularly limited; however, it is preferable that the metal atoms be at least one selected from the group consisting of titanium, vanadium, chromium, manganese, iron, cobalt, nickel, copper, zirconium, niobium, molybdenum, ruthenium, rhodium, palladium, silver, hafnium, tantalum, tungsten, rhenium, osmium, iridium, platinum and gold. In this case, the carbon-based material exerts excellent performance particularly as a catalyst for promoting an oxygen reduction reaction and an oxygen generation reaction. An amount of the metal atoms contained in the carbon-based material may be appropriately set so that the carbon-based material has excellent catalytic performance.

It is preferable that the carbon-based material be further doped with one or more nonmetal atoms selected from nitrogen, boron, sulfur and phosphorus. An amount of the nonmetal atoms doped into the carbon-based material may also be appropriately set so that the carbon-based material has such excellent catalytic performance.

The carbon-based material is obtained, for example, in such a manner that a carbon-source raw material such as graphite and amorphous carbon is used as a base, and that this carbon-source raw material is doped with the metal atoms and the one or more nonmetal atoms selected from nitrogen, boron, sulfur and phosphorus.

Combinations of the metal atoms and the nonmetal atoms, which are doped into the carbon-based material, are appropriately selected. In particular, it is preferable that the nonmetal atoms contain nitrogen, and that the metal atoms contain iron. In this case, the carbon-based material can have particularly excellent catalytic activity. Note that the nonmetal atoms may be only nitrogen. Moreover, the nonmetal atoms may be only iron.

The nonmetal atoms may contain nitrogen, and the metal atoms may contain at least either one of cobalt and manganese. Also in this case, the carbon-based material can have particularly excellent catalytic activity. Note that the nonmetal atoms may be only nitrogen. Moreover, the metal atoms may be only cobalt, only manganese, or only cobalt and manganese.

The shape of the carbon-based material is not particularly limited. For example, the carbon-based material may have a particulate shape or a sheet-like shape. Dimensions of the carbon-based material having the sheet-like shape are not particularly limited; however, for example, the carbon-based material may have minute dimensions. The carbon-based material having the sheet-like shape may be porous. It is preferable that the porous carbon-based material having the sheet-like shape have, for example, a woven fabric shape, a nonwoven fabric shape, and the like. Such a carbon-based material as described above can constitute the electrically conductive layer 32 without the need for the electroconductive material.

The carbon-based material composed as the catalyst in the electrically conductive layer 32 can be prepared as follows. First, a mixture containing the nonmetal compound containing at least one nonmetal selected from the group consisting of nitrogen, boron, sulfur and phosphorus, a metal compound, and the carbon-source raw material is prepared. Then, this mixture is heated at a temperature of 800 °C or more to 1000 °C or less for 45 seconds or more and less than 600 seconds. In this way, the carbon-based material composed as the catalyst can be obtained.

Here, as mentioned above, for example, graphite or amorphous carbon can be used as the carbon-source raw material. Moreover, the metal compound is not particularly limited as long as the metal compound is a compound containing metal atoms capable of coordinate bond with the nonmetal atoms to be doped into the carbon-source raw material. As the metal compound, for example, there can be used at least one selected from the group consisting of: inorganic metal salt such as metal chloride, nitrate, sulfate, bromide, iodide and fluoride; an organic metal salt such as acetate; a hydrate of inorganic metal salt; and a hydrate of organic metal salt. For example, when the graphite is doped with iron, it is preferable that the metal compound contain iron (III) chloride. Moreover, when the graphite is doped with cobalt, it is preferable that the metal compound contain cobalt chloride. Moreover, when the carbon-source raw material is doped with manganese, it is preferable that the metal compound contain manganese acetate. It is preferable that an amount of use of the metal compound be determined so that a ratio of the metal atoms in the metal compound to the carbon-source raw material can stay within a range of 5 to 30 % by mass, and it is more preferable that the amount of use of the metal compound be determined so that this ratio can stay within a range of 5 to 20 % by mass.

As described above, it is preferable that the nonmetal compound be a compound of at least one nonmetal selected from the group consisting of nitrogen, boron, sulfur and phosphorus. As the nonmetal compound, for example, there can be used at least one compound selected from the group consisting of pentaethylenehexamine, ethylenediamine, tetraethylenepentamine, triethylenetetramine, ethylenediamine, octylboronic acid, 1,2-bis(diethylphosphino)ethane, triphenyl phosphite, and benzyl disulfide. An amount of use of the nonmetal compound is appropriately set according to a doping amount of the nonmetal atoms into the carbon-source raw material. It is preferable that the amount of use of the nonmetal compound be determined so that a molar ratio of the metal atoms in the metal compound and the nonmetal atoms in the nonmetal compound can stay within a range of 1:1 to 1:2, and it is more preferable that the amount of use of the nonmetal compound be determined so that this molar ratio can stay within a range of 1:1.5 to 1:1.8.

The mixture containing the nonmetal compound, the metal compound and the carbon-source raw material in the case of preparing the carbon-based material composed as the catalyst can be obtained, for example, as follows. First, the carbon-source raw material, the metal compound, and the nonmetal compound are mixed with one another, and as necessary, a solvent such as ethanol is added to an obtained mixture, and a total amount of the mixture is adjusted. These are further dispersed by an ultrasonic dispersion method. Subsequently, after these are heated at an appropriate temperature (for example, 60 °C), the mixture is dried to remove the solvent. In this way, such a mixture containing the nonmetal compound, the metal compound and the carbon-source raw material is obtained.

Next, the obtained mixture is heated, for example, in a reducing atmosphere or an inert gas atmosphere. In this way, the nonmetal atoms are doped into the carbon-source raw material, and the metal atoms are also doped thereinto by the coordinate bond between the nonmetal atoms and the metal atoms. It is preferable that a heating temperature be within a range of 800 °C or more to 1000 °C or less, and it is preferable that a heating time be within a range of 45 seconds or more to less than 600 seconds. Since the heating time is short, the carbon-based material is efficiently produced, and the catalytic activity of the carbon-based material is further increased. Note that a heating rate of the mixture at the start of heating in the heat treatment be 50 °C/s or more. Such rapid heating further enhances the catalytic activity of the carbon-based material.

Moreover, the carbon-based material may be further acid-washed. For example, the carbon-based material may be dispersed in pure water for 30 minutes by a homogenizer, and thereafter, the carbon-based material may be placed in 2M sulfuric acid and stirred at 80 °C for 3 hours. In this case, elution of the metal component from the carbon-based material is suppressed.

By such a production method, a carbon-based material is obtained, in which contents of such an inactive metal compound and a metal crystal are significantly low, and electric conductivity is high.

A material of the oxygen permeable layer 33 is not particularly limited as long as the material has oxygen permeability, and more preferably, has water-repellent performance. As the material of the oxygen permeable layer 33, for example, at least either one of silicone rubber and polydimethylsiloxane can be used. Since these materials have high oxygen solubility and oxygen diffusibility, which are derived from the molecular structure of silicone, these materials are excellent in oxygen permeability. Moreover, these materials are also excellent in water-repellent performance since surface free energy thereof is small. Therefore, it is particularly preferable that the oxygen permeable layer 33 contain silicone.

Moreover, as the material of the oxygen permeable layer 33, there can be used at least one selected from the group consisting of ethyl cellulose, poly-4-methylpentene-1, polybutadiene, polytetrafluoroethylene and butyl rubber. These materials are also preferable because these materials have high oxygen permeability and water repellency.

Note that, as the oxygen permeable layer 33, nonwoven fabric such as a waterproof permeable membrane and nonwoven fabrics of polyethylene and polypropylene can also be used. Specifically, as the oxygen permeable layer 33, Gore-Tex (registered trademark) can be used, which is formed by combining a polyurethane polymer and a film obtained by stretching polytetrafluoroethylene with each other.

In order to efficiently supply oxygen to the electrically conductive layer 32, as shown in Fig. 9, it is preferable that the oxygen permeable layer 33 be in contact with the water-repellent layer 31 and the electrically conductive layer 32. In this way, oxygen is directly supplied to the electrically conductive layer 32, and further, oxygen reaches the catalyst through the inside of the electrically conductive layer 32, and accordingly, a progress of a local cell reaction described later is facilitated. However, if oxygen is supplied to the electrically conductive layer 32, a gap may be present between the water-repellent layer 31 and the oxygen permeable layer 33 or between the electrically conductive layer 32 and the oxygen permeable layer 33.

Moreover, it is preferable that the oxygen permeable layer 33 have the water-repellent performance. That is to say, it is preferable that the oxygen permeable layer 33 be a sheet having the water-repellent performance. As will be described later, the oxygen permeable layer 33 is disposed so as to separate the gas phase, which contains oxygen, and the electrolysis solution as a liquid phase, which is held in an inside of a wastewater tank, from each other. Such "separation" as used herein refers to physical blocking. In this way, organic matter and a nitrogen-containing compound in the electrolysis solution can be suppressed from moving to the gas phase side.

Moreover, the oxygen permeable layer 33 can adjust an oxygen permeable amount depending on the material to be used, and can suppress excessive permeation of oxygen molecules on the gas phase side into the electrolysis solution. Therefore, as will be described later, the inside of the wastewater tank can be more surely maintained under an anaerobic condition where oxygen is not present. As a result, propagation of aerobic microorganisms can be suppressed in the wastewater tank, and accordingly, liquid treatment can be performed under the anaerobic condition.

As described above, the electrode assembly 100 according to this embodiment includes the hollow member 10 having: the hollow portion 1; the oxygen supply portion 4 that supplies oxygen to the hollow portion 1; and the oxygen permeable portion 5 that allows permeation of oxygen supplied to the hollow portion 1. Moreover, the electrode assembly 100 includes: the electrodes 30, each of which is provided on the outside of the hollow member 10 in the oxygen permeable portion 5, and is composed in such a manner that the water-repellent layer 31 having oxygen permeability and the electrically conductive layer 32 are laminated on each other from the oxygen permeable portion 5 side; and the buffer member 20, which is provided in the hollow portion 1, and has pressure resistance. The electrode assembly 100 has air permeability from the oxygen supply portion 4 to the oxygen permeable portion 5. Therefore, even when the electrode assembly 100 is immersed in the electrolysis solution, and is put under a high water-pressure environment, a space for sufficiently supplying oxygen to the positive electrode is ensured. Therefore, it becomes possible to suppress the deterioration of the battery characteristics, and to stably produce electrical energy.

Note that, as mentioned above, as the material that composes the right sidewall 21a and left sidewall 21b of the buffer member 20, for example, at least one selected from the group consisting of resin, metal, glass and the carbon material can be used. However, the right sidewall 21a and left sidewall 21b of the buffer member 20 themselves may be composed of the electrodes 30. In this case, the oxygen supplied from the oxygen supply portion 4 of the hollow member 10 is directly supplied to the electrodes 30 through the oxygen permeable portions 5, and accordingly, it becomes possible to further enhance power generation performance.

Moreover, in Fig. 4 to Fig. 7 and Fig. 9, the electrodes 30 are provided on both the right side faces and left side faces of the hollow member 10 and the buffer member 20. However, this embodiment is not limited to this configuration. For example, the electrode 30 may be joined only to one side faces of the hollow member 10 and the buffer member 20, and other side faces thereof may be sealed by a plate member.

Moreover, the bottom face of the buffer member 20 may be sealed by a plate member, or may be sealed by a sealing material as described later. In a similar way, the bottom faces of the hollow member 10 and the support members 22, which are cylindrical and shown in Figs. 8(a) and 8(b), may also be sealed by such a plate member, or may also be sealed by such a sealing material. The bottom faces of the hollow member 10 and the support member(s) 22 are sealed by the plate member or the sealing material as described above, whereby it becomes possible to maintain the gas phase in the inside of the hollow member and the buffer member.

### [Microbial fuel cell]

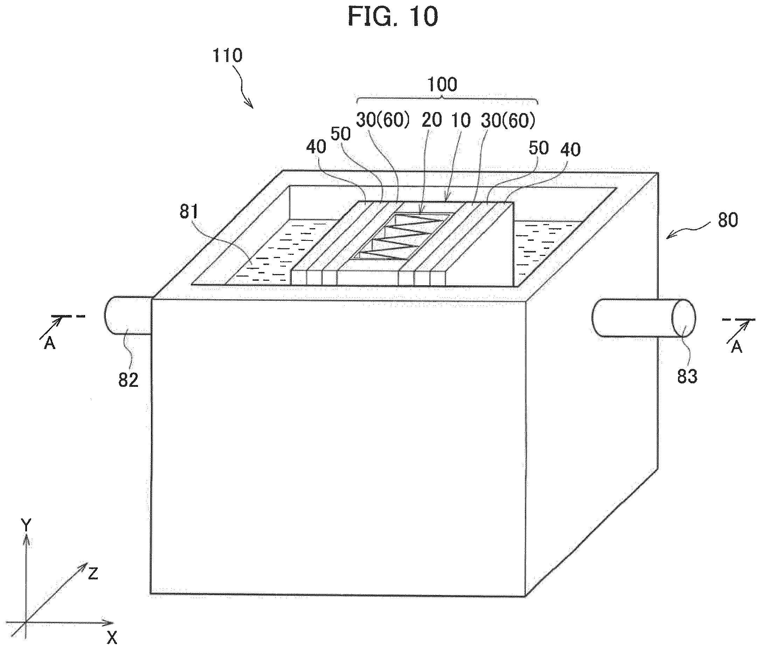

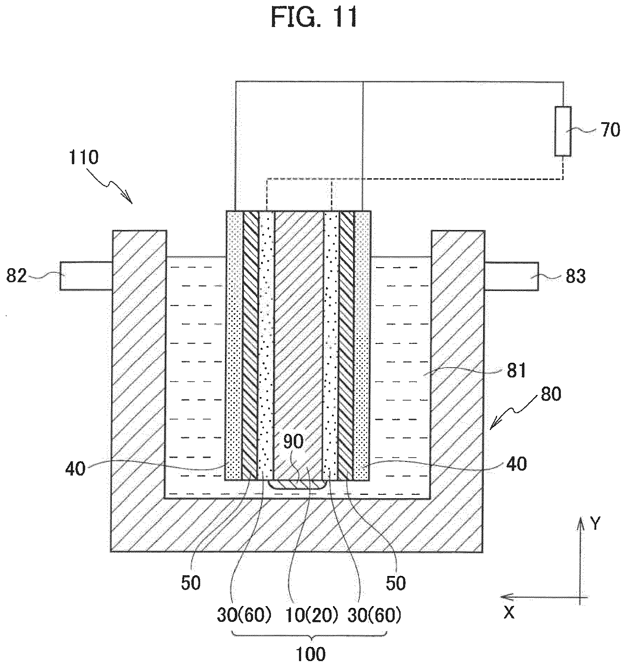

Next, a description will be made of the microbial fuel cell according to this embodiment. As shown in Fig. 10 and Fig. 11, a microbial fuel cell 110 of this embodiment includes: negative electrodes 40 which support microorganisms; ion transfer layers 50 which allow permeation of hydrogen ions; and positive electrodes 60 composed of the above-mentioned electrodes 30, each of which is separated from the negative electrode 40 via the ion transfer layer 50.

Each of the negative electrodes 40 has a structure in which microorganisms are supported on an electric conductor sheet having electric conductivity. As the electric conductor sheet, there can be used at least one selected from the group consisting of a porous electric conductor sheet, a woven fabric electric conductor sheet, and a nonwoven fabric electric conductor sheet. Moreover, the electric conductor sheet may be a laminated body formed by laminating a plurality of sheets on one another. Such a sheet having a plurality of pores is used as the electric conductor sheet of the negative electrode 40, whereby it becomes easy for hydrogen ions generated by the local cell reaction to be described later to move in a direction of the ion transfer layer 50, thus making it possible to increase a rate of the oxygen reduction reaction. Moreover, from a viewpoint of enhancing the ion permeability, it is preferable that the electric conductor sheet of the negative electrode 40 have a space (gap) continuous in the lamination direction X of the electrode 30, the negative electrode 40 and the ion transfer layer 50, that is, in a thickness direction of the electric conductor sheet.

The electric conductor sheet may be a metal plate having a plurality of through holes in the thickness direction. Therefore, as a material that composes the electric conductor sheet of the negative electrode 40, for example, there can be used at least one selected from the group consisting of electroconductive metal such as aluminum, copper, stainless steel, nickel and titanium, carbon paper and carbon felt.

The microorganisms supported on the negative electrode 40 are not particularly limited as long as being microorganisms which decompose the organic matter in the liquid to be treated (electrolysis solution) or the compound containing nitrogen (that is, a nitrogen-containing compound); however, it is preferable to use anaerobic microorganisms which do not require oxygen for growth thereof. The anaerobic microorganisms do not require air for oxidatively decomposing the organic matter in the liquid to be treated. Therefore, electric power required to feed air can be reduced to a large extent. Moreover, since free energy acquired by the microorganisms is small, it becomes possible to reduce an amount of generated sludge.

It is preferable that the negative electrode 40 hold the anaerobic microorganisms in such a manner that a biofilm containing the anaerobic microorganisms is laminated and fixed thereto. Note that the term "biofilm" generally refers to a three-dimensional structure containing a microbial population and an extracellular polymeric substance (EPS) produced by the microbial population. However, the anaerobic microorganism may be held on the negative electrode 40 without using the biofilm. It is preferable that the anaerobic microorganisms held by the negative electrode 40 be, for example, electricity-producing bacteria having an extracellular electron transfer mechanism. Specific examples of the anaerobic microorganisms include Geobacter bacteria, Shewanella bacteria, Aeromonas bacteria, Geothrix bacteria, and Saccharomyces bacteria.

The microbial fuel cell 110 of this embodiment includes the ion transfer layers 50, each of which allows the permeation of the hydrogen ions. Each of the ion transfer layers 50 has a function to allow the permeation of the hydrogen ions generated at the negative electrode 40, and to move the generated hydrogen ions to the positive electrode 60 side. As the ion transfer layer 50, an ion exchange membrane using ion exchange resin can be used. As the ion exchange resin, for example, NAFION (registered trademark) made by DuPont Kabushiki Kaisha, and Flemion (registered trademark) and Selemion (registered trademark) made by Asahi Glass Co., Ltd. can be used.

Moreover, as the ion transfer layer 50, a porous membrane having pores capable of allowing the permeation of the hydrogen ions may be used. That is, the ion transfer layer 50 may be a sheet having a space (gap) for allowing the hydrogen ions to move between the negative electrode 40 and the positive electrode 60. Therefore, it is preferable that the ion transfer layer 50 have at least one selected from the group consisting of a porous sheet, a woven fabric sheet and a nonwoven fabric sheet. Moreover, at least one selected from the group consisting of a glass fiber membrane, a synthetic fiber membrane and a plastic nonwoven fabric can be used for the ion transfer layer 50, and the ion transfer layer 50 may be a laminated body formed by laminating a plurality of these on one another. Since such a porous sheet has a large number of pores in an inside thereof, it becomes possible for the hydrogen ions to move therethrough with ease. Note that a pore diameter of the ion transfer layer 50 is not particularly limited as long as the hydrogen ions can move from the negative electrode 40 to the positive electrode 60.

As mentioned above, the ion transfer layer 50 has such a function to allow the permeation of the hydrogen ions generated at the negative electrode 40, and to move the generated hydrogen ions to the positive electrode 60 side. However, for example, if the negative electrode 40 and the positive electrode 60 are in close proximity with each other without contact, then the hydrogen ions can move from the negative electrode 40 to the positive electrode 60 without providing the ion transfer layer 50. Therefore, in the microbial fuel cell 110 of this embodiment, the ion transfer layer 50 is not an essential constituent. However, provision of the ion transfer layer 50 makes it possible to efficiently move the hydrogen ions from the negative electrode 40 to the positive electrode 60, and it is preferable that the ion transfer layer 50 be provided from a viewpoint of enhancing the output.

The microbial fuel cell 110 of this embodiment includes the above-mentioned electrode assembly 100, and further, each of the electrodes 30 includes the water-repellent layer 31 and the electrically conductive layer 32. Moreover, the ion transfer layers 50 are disposed outside the electrically conductive layers 32. Then, as shown in FIG. 11, the electrically conductive layers 32 of the positive electrodes 60 and the negative electrodes 40 are individually electrically connected to an external circuit 70.

A bottom face of the electrode assembly 100 or the bottom face of the buffer member 20 may be sealed by a sealing material 90. A high water pressure may be applied to the bottom face of the electrode assembly 100 and the bottom face of the buffer member 20 in some cases, and accordingly, these bottom faces are sealed by the sealing material 90, whereby an electrolysis solution 81 can be prevented from flowing in from the bottom faces concerned, and the gas phase in the inside of the buffer member 20 can be maintained. Note that, as mentioned above, the hollow member 10 of the electrode assembly 100 is joined to the outer peripheral portions of the water-repellent layers 31 in the electrodes 30, and accordingly, the electrolysis solution can be prevented from flowing into the buffer member 20. A raw material of the sealing material 90 is not particularly limited; however, for example, adhesive, sealant, putty, cement and the like can be used.

In an inside of a wastewater tank 80, there are installed the electrode assembly 100, the negative electrodes 40 and the ion transfer layers 50. At this time, in order to ensure the air permeability to the inside of the hollow member 10, the electrode assembly 100 is immersed in the electrolysis solution so that the oxygen supply portion 4 can be exposed to the outside air. Moreover, the wastewater tank 80 holds the electrolysis solution 81 in the inside thereof, and may have a configuration through which the electrolysis solution 81 is circulated. For example, as shown in Fig. 10 and Fig. 11, the wastewater tank 80 may be provided with a liquid supply port 82 for supplying the electrolysis solution 81 to the wastewater tank 80 and a liquid discharge port 83 for discharging the treated electrolysis solution 81 from the wastewater tank 80.

Note that, preferably, the wastewater tank 80 is maintained in an anaerobic condition where, for example, molecular oxygen is absent or a concentration of the molecular oxygen is extremely small even if the molecular oxygen is present. In this way, it becomes possible to keep the electrolysis solution 81 in the wastewater tank 80 so that the electrolysis solution 81 can hardly contact oxygen.

Next, a description will be made of a function of the microbial fuel cell 110 according to this embodiment. When the microbial fuel cell 110 is operated, the electrolysis solution 81 containing at least either one of the organic matter and the nitrogen-containing compound is supplied to each of the negative electrodes 40, and air (or oxygen) is supplied to each of the positive electrodes 60. At this time, air is continuously supplied through the oxygen supply portion 4 provided in an upper portion of the electrode assembly 100. Note that, preferably, the electrolysis solution 81 is also continuously supplied through the liquid supply port 82 and the liquid discharge port 83.

Then, in the positive electrode 60, air is diffused by the water-repellent layer 31 and reaches the electrically conductive layer 32. At this time, when the positive electrode 60 (electrode 30) has the oxygen permeable layer 33, air diffuses by the water-repellent layer 31, and oxygen in the air permeates the oxygen permeable layer 33 and reaches the electrically conductive layer 32. Moreover, in the negative electrode 40, hydrogen ions and electrons are generated from the organic matter and/or the nitrogen-containing compound in the electrolysis solution 81 by the catalytic action of the microorganisms. The generated hydrogen ions permeate the ion transfer layer 50 and move to the positive electrode 60 side. Moreover, the generated electrons move to the external circuit 70 through the electric conductor sheet of the negative electrode 40, and further, move from the external circuit 70 to the electrically conductive layer 32 of the positive electrode 60. Then, the hydrogen ions and the electrons, which have moved to the electrically conductive layer 32, are combined with oxygen by an action of the catalyst, and are consumed as water. At this time, the external circuit 70 recovers electrical energy flowing in such a closed circuit.

Here, for example, each of the negative electrodes 40 according to this embodiment may be modified by electron transfer mediator molecules. Alternatively, the electrolysis solution 81 in the wastewater tank 80 may contain the electron transfer mediator molecules. In this way, the electron transfer from the anaerobic microorganisms to the negative electrode 40 is promoted, and more efficient liquid treatment can be realized.

Specifically, in the metabolic mechanism by the anaerobic microorganisms, electrons are transferred within cells or with terminal electron acceptors. When such mediator molecules are introduced into the electrolysis solution 81, the mediator molecules act as the terminal electron acceptors for metabolism, and deliver the received electrons to the negative electrode 40. As a result, it becomes possible to enhance an oxidative decomposition rate of the organic matter and the like in the electrolysis solution 81. The electron transfer mediator molecules as described above are not particularly limited; however, for example there can be used at least one selected from the group consisting of neutral red, anthraquinone-2,6-disulfonate (AQDS), thionine, potassium ferricyanide, and methyl viologen.

As described above, the microbial fuel cell 110 according to this embodiment includes: the electrode assembly 100; and the negative electrodes 40 which support the microorganisms. Then, the electrodes 30 in the electrode assembly 100 are the positive electrodes 60. The microbial fuel cell 110 includes the hollow member 10 and the buffer member 20 in order to ensure the air permeability, and accordingly, the positive electrode 60 exhibits high pressure resistance. In this way, even when the microbial fuel cell 110 is enlarged, or even when a water depth of the microbial fuel cell 110 is deepened, such a space for supplying oxygen to the positive electrodes is ensured, and accordingly, oxygen can be sufficiently supplied to the positive electrodes 60. Therefore, it becomes possible to suppress a deterioration of the power generation performance of the microbial fuel cell 110, and to stably produce the electrical energy.

It is preferable that the microbial fuel cell 110 further include the ion transfer layers 50, which are provided between the electrodes 30 in the electrode assembly 100 and the negative electrodes 40, and have proton permeability. Provision of the ion transfer layers 50 makes it possible to efficiently move the hydrogen ions from the negative electrodes 40 to the positive electrodes 60, and accordingly, it becomes possible to achieve further enhancement of the output of the microbial fuel cell 110.

In the microbial fuel cell 110, it is preferable that the oxygen supply portion 4 in the electrode assembly 100 be an opening portion provided on one face of the hollow member 10, and that the electrode assembly 100 be immersed in the electrolysis solution so that the opening portion can be exposed to the outside air. In this way, it becomes possible to suppress the electrolysis solution from flowing into the electrode assembly 100, and further to ensure high air permeability from the oxygen supply portion 4 of the hollow member 10 to the oxygen permeable portions 5 thereof.

### [Water treatment device]

Next, a description will be made of the water treatment device according to this embodiment. The water treatment device of this embodiment includes: the electrode assembly 100; and the negative electrodes 40 which support microorganisms for purifying the liquid to be treated. Then, the electrodes 30 in the electrode assembly 100 are the positive electrodes 60.

As mentioned above, the microbial fuel cell 110 of this embodiment supplies the electrolysis solution 81 (liquid to be treated), which contains at least either one of the organic matter and the nitrogen-containing compound, to the negative electrodes 40. Then, by the metabolism of the microorganisms supported on each of the negative electrodes 40, the organic matter and/or the nitrogen-containing compound in the electrolysis solution 81 generates carbon dioxide or nitrogen together with hydrogen ions and electrons.

Specifically, for example, when the electrolysis solution 81 contains glucose as the organic matter, then carbon dioxide, hydrogen ions and electrons are generated by the following local cell reaction.
- Negative electrode 40 (anode): C6H₁₂O₆ + 6H₂O → 6CO₂ + 24H⁺ + 24e⁻
- Positive electrode 60 (cathode): 6O₂ + 24H⁺ + 24e⁻ → 12H₂O

Moreover, when the electrolysis solution 81 contains ammonia as the nitrogen-containing compound, then nitrogen, hydrogen ions and electrons are generated by the following local cell reaction.
- Negative electrode 40 (anode): 4NH₃ → 2N₂ + 12H⁺ + 12e⁻
- Positive electrode 60 (cathode): 3O₂ + 12H⁺ + 12e⁻ → 6H₂O

As described above, the water treatment device of this embodiment uses the microbial fuel cell 110, whereby the organic matter and the nitrogen-containing compound in the electrolysis solution 81 come into contact with the negative electrodes 40 and are oxidatively decomposed, and accordingly, the electrolysis solution 81 can be purified. Moreover, as mentioned above, in the wastewater tank 80, there can be provided: the liquid supply port 82 for supplying the electrolysis solution 81 to the wastewater tank 80; and the liquid discharge port 83 for discharging the treated electrolysis solution 81 from the wastewater tank 80, and then the electrolysis solution 81 can be supplied continuously. Therefore, it becomes possible to continuously bring the electrolysis solution 81 into contact with the negative electrodes 40, and to efficiently process the electrolysis solution 81.

It is preferable that the water treatment device of this embodiment further include the ion transfer layers 50, which are provided between the electrodes 30 in the electrode assembly 100 and the negative electrodes 40, and have proton permeability. Provision of the ion transfer layers 50 makes it possible to efficiently move the hydrogen ions from the negative electrodes 40 to the positive electrodes 60, and accordingly, it becomes possible to achieve further enhancement of purification performance.

### [Buffer member]

Next, referring to the drawings, a description will be made in detail of Embodiments 1 to 4 of the buffer member in the electrode assembly. Note that the same reference numerals will be assigned to the same constituents as those of the electrode assembly, the microbial fuel cell and the water treatment device, which are mentioned above, and a duplicate description will be omitted.

### (Embodiment 1)

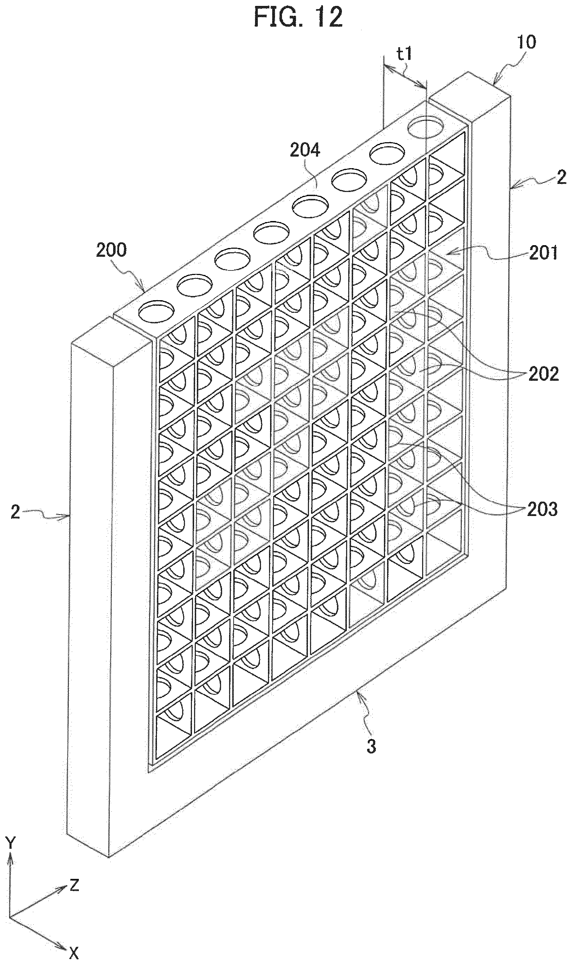

Fig. 12 shows a state in which a buffer member 200 according to Embodiment 1 is combined with the hollow member 10. As mentioned above, the hollow member 10 is such a frame member in which the bottoms of the two first columnar members 2 are coupled to each other by the second columnar member 3, and the hollow portion 1 is formed in the inner space surrounded by the first columnar members 2 and the second columnar member 3.

The buffer member 200 includes a plurality of minute shells 201. Each of the shells 201 is formed by being surrounded by shell walls 202, and further, is pierced so that air can flow along the lamination direction X of the hollow member 10 and the electrodes 30. Then, a cross-sectional shape of the shell 201 when viewed from the lamination direction X is substantially square.

In each of the shell walls 202, a ventilation hole 203 is formed so that air can flow between the adjacent shells 201. Moreover, the ventilation holes 203 are also formed in an upper face 204 of the buffer member 200, and air can be supplied from the outside of the buffer member 200 to the inside of the shell 201.

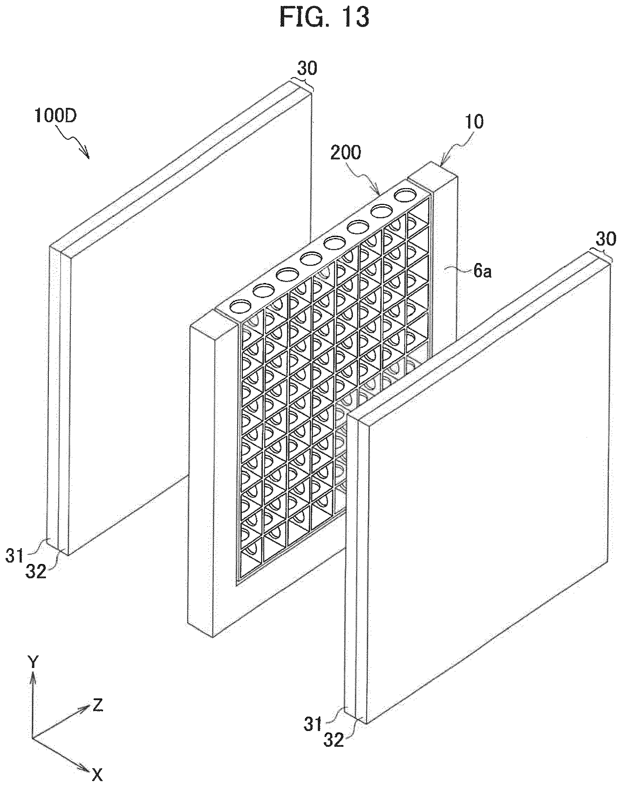

As shown in Fig. 13, an electrode assembly 100D includes such electrodes 30 provided outside of the hollow member 10 in the oxygen permeable portion 5. Each of the electrodes 30 is composed in such a manner that the water-repellent layer 31 having oxygen permeability and the electrically conductive layer 32 are laminated on each other from the oxygen permeable portion 5 side. Moreover, a right side face 6a of the hollow member 10 is joined to the outer peripheral portion of the water-repellent layer 31 of the electrode 30, and accordingly, when the electrode assembly 100D is immersed in the electrolysis solution, the electrolysis solution can be suppressed from flowing into the inner space of the hollow member 10 from a joint portion between the outer peripheral portion of the water-repellent layer 31 and the right side face 6a.

A cavity is formed between the two electrodes 30 so that air can flow therethrough, and faces of the shell walls 202, which are opposed to the electrodes 30, support the electrodes 30 from the inside of the hollow portion 1. Therefore, even if the electrode assembly 100D is immersed in the electrolysis solution, and a water pressure is applied to each of the electrodes 30, the electrode 30 is suppressed from being bent to the inner space of the hollow member 10 since the electrode 30 is supported by the shell walls 202 of the buffer member 200. As a result, the air permeability from the oxygen supply portion 4 of the hollow member 10 to the oxygen permeable portion 5 thereof is sufficiently ensured, and accordingly, it becomes possible to enhance the oxygen supply capability to the water-repellent layer 31.

Then, in order that air can flow between the shells 201 adjacent to one another, the ventilation holes 203 are formed in the shell walls 202, and further, the ventilation holes 203 are also formed in the upper face 204 of the buffer member 200. Therefore, air flows into the buffer member 200 from the oxygen supply portion 4 of the hollow member 10 through the ventilation hole 203 of the upper face 204, and further, the air diffuses into the buffer member 200 through the ventilation holes 203 of the shell walls 202. Then, the air is supplied to the water-repellent layer 31 of each of the electrodes 30 through the oxygen permeable portion 5 of the hollow member 10. As described above, in the electrode assembly 100D, the oxygen supplied from the oxygen permeable portion 4 of the hollow member 10 is efficiently supplied to each of the electrodes 30 through the buffer member 200 and the oxygen supply portion 5, and accordingly, it becomes possible to enhance the power generation performance.

As mentioned above, in the buffer member 200, when viewed from the lamination direction X of the hollow member 10 and the electrodes 30, the cross-sectional shape of the shells 201 formed of the shell walls 202 is substantially square. Then, the electrodes 30 adhered to both faces of the buffer member 200 just need to have a strength enough to withstand a water pressure from faces of such squares. Therefore, as an area of such shells 201 is being made smaller, a more allowance is given to durability (strength) against the water pressure applied to the electrodes 30. As a result, the electrodes 30 can be thinned, and accordingly, the oxygen permeability is enhanced, and it becomes possible to convert the chemical energy into the electrical energy more efficiently.

The material of the member that composes the buffer member 200 is not particularly limited; however, at least one selected from the group consisting of, for example, resin, metal, glass and a carbon material is usable. As the resin, at least one selected from the group consisting of polystyrene, polyethylene, polypropylene, polyvinyl chloride and polycarbonate is usable. Moreover, as the metal, at least either one of stainless steel and aluminum is usable.

Such an external shape of the buffer member 200 is not particularly limited, either. However, it is necessary for the electrode assembly 100D to have air permeability from the oxygen supply portion 4 to the oxygen permeable portion 5 in a state in which the buffer member 200 is inserted into the hollow portion 1 of the hollow member 10. Therefore, it is also necessary for the buffer member 200 itself to have high air permeability. Moreover, it is necessary for the buffer member 200 to have high durability against the water pressure from the electrodes 30. Therefore, it is preferable that the buffer member 200 be formed as a flat plate having a plurality of the minute shells 201.

The cross-sectional shape of the shells 201 when viewed from the lamination direction X of the hollow member 10 and the electrodes 30 is not particularly limited, either. The cross-sectional shape of the shells 201 may be triangular, square, rectangular, circular, hexagonal, or the like. Moreover, the ventilation holes 203 are provided in the shell walls 202 since the air permeability between the adjacent shells 201 is required; however, a shape, size and number of the ventilation holes 203 are not particularly limited, either as long as the air permeability can be ensured.

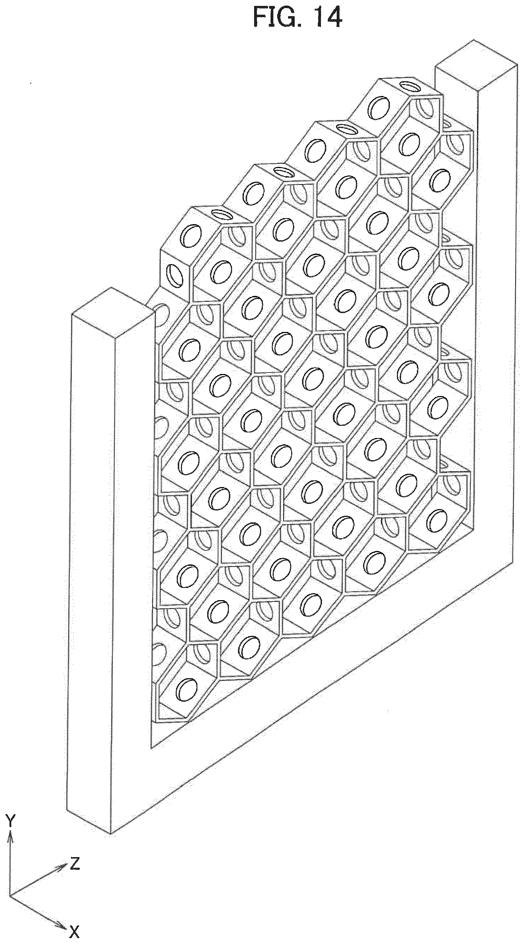

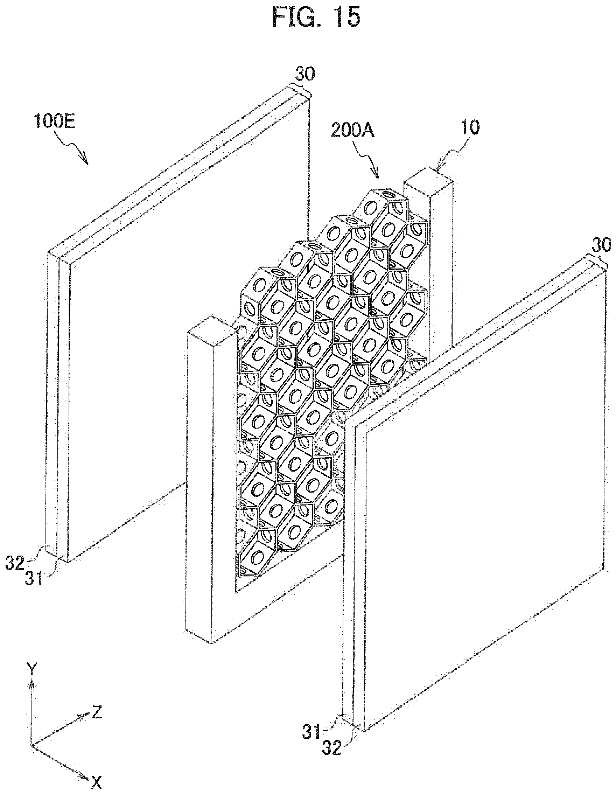

Here, Fig. 14 shows a case where the cross-sectional shape of shells 201 which compose a buffer member 200A is substantially regular hexagonal. Moreover, Fig. 15 shows an electrode assembly 100E in which the electrodes 30 are provided outside the hollow member 10 including the buffer member 200A. The buffer member 200A having such a honeycomb structure has high durability against an external water pressure, and accordingly, the electrodes 30 can be further suppressed from being bent to the inner space of the hollow member 10 while ensuring high air permeability by reducing the number of shell walls 202. As a result, the electrodes 30 can also be thinned, and accordingly, the oxygen permeability is enhanced, and it becomes possible to convert the chemical energy into the electrical energy more efficiently.

Next, a description will be made of a method for manufacturing the buffer member 200. The method for manufacturing the buffer member 200 is not particularly limited as long as the buffer member 200 having the above-mentioned configuration can be manufactured; however, the buffer member 200 can be manufactured, for example, as follows.

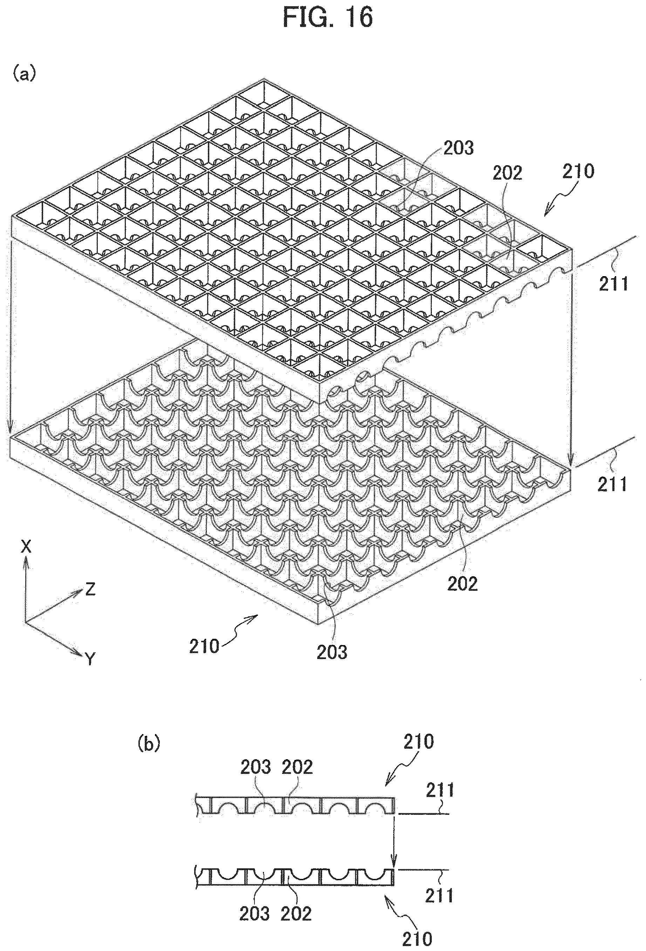

As shown in Figs. 16(a) and 16(b), first, lattice materials 210 are fabricated, which have a shape obtained by dividing the buffer member 200 into two along a YZ plane. In the shell walls 202 of the lattice materials 210, a plurality of semicircular ventilation holes 203 are formed so that the circular ventilation holes 203 can be formed by overlapping the two lattice materials 210 on each other. Such a method for manufacturing the lattice materials 210 is not particularly limited; however, the lattice materials 210 can be obtained by being molded by using a metal mold, for example.

Then, as shown in Figs. 16(a) and 16(b), the two lattice materials 210 are matched with each other so that parting lines 211 made of faces on which the semicircular ventilation holes 203 in the lattice materials 210 are abutted on each other. Then, the shell walls 202 of the matched lattice materials 210 are joined to each other, whereby the buffer member 200 can be obtained. A joining method is not particularly limited, and when the lattice materials 210 are made of resin, the lattice materials 210 can be joined to each other by welding or pressure joining. Moreover, the lattice materials 210 may be joined to each other by using an adhesive or the like. Note that, though Fig. 16 shows a case where the cross-sectional shape of the shells 201 is square, the shells 201 can be formed in a similar way also when the cross-sectional shape is triangular, rectangular, circular, hexagonal, and the like.

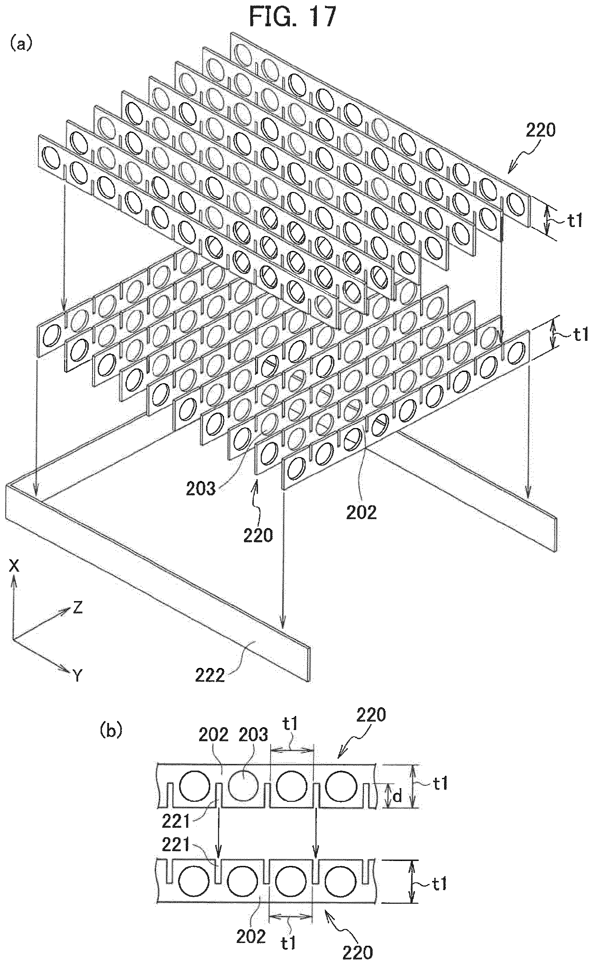

Next, a description will be made of another method for manufacturing the buffer member 200. As shown in Fig. 17, circular ventilation holes 203 are provided at an equal interval on band plates 220 having a width equal to a thickness t1 of the buffer member 200. The ventilation holes 203 can be formed by, for example, punching.

Moreover, as shown in Fig. 17(b), notches 221 for fitting are formed on the band plates 220 at the same interval as the thickness t1 of the buffer member 200. Note that a depth d of the notches 221 is approximately a half of the thickness t1 of the buffer member 200. Moreover, the ventilation holes 203 are provided in centers of the notches 221 adjacent to one another.

Next, as shown in Fig. 17(a), a plurality of the band plates 220 are fitted and assembled with one another along an up-and-down direction (vertical direction Y) and horizontal direction (depth direction Z) of the electrode assembly so that the notches 221 can be engaged with each other. Then, the number of band plates 220 is adjusted so as to follow a size of the hollow portion 1 of the hollow member 10, whereby such a latticed buffer member 200 can be formed.

In order to increase the strength of the buffer member 200, a substantially U-shaped outer periphery reinforcing member 222 can be provided as necessary on three faces of the outer peripheral portion of the band plate 220 assembled in a lattice pattern . Note that in Fig. 17(a), a reason why a configuration in which only one face (upper face) of the outer periphery reinforcing member is not surrounded is adopted is in order to ensure air permeability with the external air.

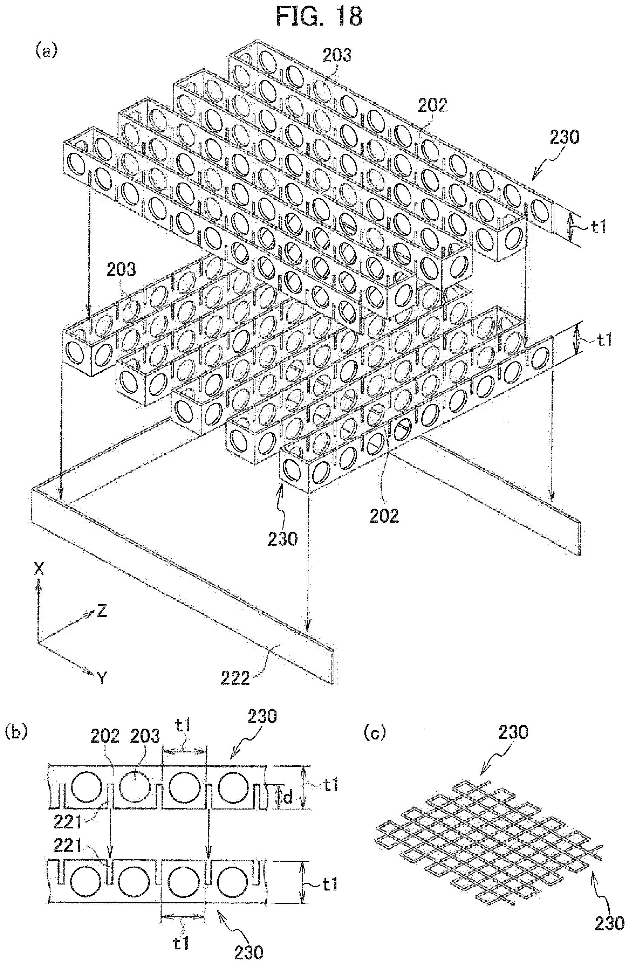

In such a manufacturing method shown in Figs. 17(a) and 17(b), the buffer member 200 is formed by assembling the plurality of band plates 220 with one another in the up-and-down direction (vertical direction Y) and the horizontal direction (depth direction Z). However, it is not necessary for the band plates 220 to be separated from one another, and as shown in Figs. 18(a) to 18(c), the buffer member 200 may be formed by assembling the band plates 230 with each other after bending the band plates 230 one by one.

Specifically, first, in a similar way to the band plates 220 in Figs. 17(a) and 17(b), the ventilation holes 203 and the notches 221 are formed in the band plates 230 using a foldable material. Next, as shown in Figs. 18(a) and 18(c), one band plate 230 is folded without being cut, and the shell wall 202 in the up-and-down direction (vertical direction Y) of the electrode assembly is formed. In a similar way, one band plate 230 is folded without being cut, and the shell wall 202 in the horizontal direction (depth direction Z) of the electrode assembly is formed. Then, as shown in Fig. 18(b), the two band plates 230 are fitted and assembled with each other so that the notches 221 can be engaged with each other, whereby the latticed buffer member 200 can be formed. Note that, in order to increase the strength of the buffer member 200, a substantially U-shaped outer periphery reinforcing member 222 can be provided on three faces of an outer peripheral portion of the latticed band plate 230 as necessary.

As described above, when the buffer member is manufactured by using the foldable material, each of the band plates 230 in the vertical direction and the horizontal direction can be formed of one piece, and accordingly, it becomes possible to reduce the number of parts. Moreover, the two band plates 230 can be fitted to each other at a time after being matched with each other, and accordingly, it becomes possible to simplify a manufacturing process of the electrode assembly.

### (Embodiment 2)

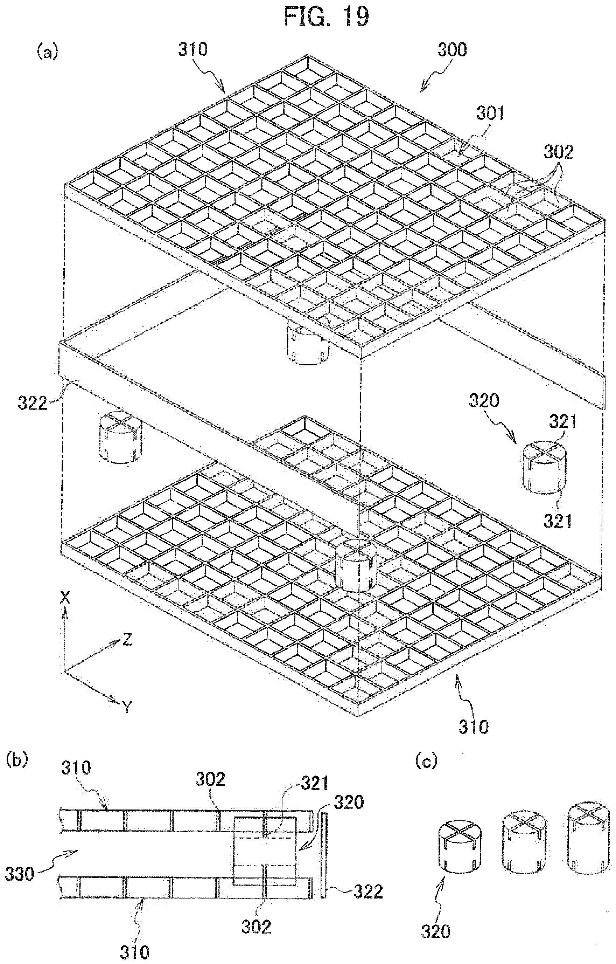

FIG. 19(a) shows a buffer member 300 according to Embodiment 2 in an exploded state. The buffer member 300 includes a plurality of minute shells 301 in a similar way to Embodiment 1. Each of the shells 301 is formed by being surrounded by shell walls 302, and further, is pierced so that air can flow along the lamination direction X of the hollow member 10 and the electrodes 30. Then, a cross-sectional shape of the shell 301 when viewed from the lamination direction X is substantially square. Note that, unlike Embodiment 1, such ventilation holes which allow air to flow between the shells 301 adjacent to one another are not formed in the shell walls 302.

As shown in Figs. 19(a) and 19(b), the buffer member 300 includes two lattice materials 310 in which a plurality of the shell walls 302 are arranged in a lattice pattern. Then, the two lattice materials 310 are fixed while providing a constant gap 330 therebetween by interposing a plurality of gap making posts 320 therebetween. Cross-shaped groove portions 321 are formed on both sides of the gap making posts 320 so that intersecting portions of the shell walls 302 of the lattice materials 310 can be inserted thereinto. Therefore, as shown in Fig. 19(b), the shell walls 302 of the lattice materials 310 are inserted into the groove portions 321 of the gap making posts 320, whereby the two lattice materials 310 can be fixed to each other with the constant gap 330. Note that, in order to increase a strength of the buffer member 300, a substantially U-shaped outer periphery reinforcing member 322 can be provided on three faces of an outer peripheral portion of each of the lattice materials 310 as necessary.

When the electrode assembly is formed by using such a buffer member 300, faces of the shell walls 302, which are opposed to each of the electrodes 30, support the electrode 30 from the inside of the hollow portion 1. Therefore, even if the electrode assembly is immersed in the electrolysis solution, and a water pressure is applied to the electrode 30, the electrode 30 is suppressed from being bent to the inner space of the hollow member 10 since the electrode 30 is supported by the shell walls 302 and the gap making posts 320 in the buffer member 300. As a result, the air permeability from the oxygen supply portion 4 of the hollow member 10 to the oxygen permeable portion 5 thereof is sufficiently ensured, and accordingly, it becomes possible to enhance the oxygen supply capability to the water-repellent layer 31. Moreover, in the buffer member 300 of Embodiment 2, the gap 330 is provided between the two lattice materials 310. Therefore, the air supplied from the oxygen supply portion 4 of the hollow member 10 passes through the gap 330 and the shells 301 and reaches the oxygen permeable portion 5, and accordingly, air can be efficiently supplied to each of the electrodes 30.

In the buffer member 300, the gap making posts 320 are installed between the lattice materials 310, whereby air permeability between the shells 301 can be ensured, and further, water pressure resistance can also be ensured. Then, according to a required amount of the air permeability, as shown in Fig. 19(c), a size of the gap 330 can be adjusted by changing a length of the gap making posts 320. Therefore, it becomes possible to easily change an airflow amount in the inside of the buffer member 300.

In the buffer member 300 of Embodiment 2, the position and number of the gap making posts 320 can be set arbitrarily. For example, the required water pressure resistance changes according to a depth of the electrode assembly, and accordingly, for example, the number of the gap making posts 320 can be reduced in a shallow portion, and the number of the gap making posts 320 can be increased in a deep portion.

Fig. 19(a) shows a case where the cross-sectional shape of the shells 301 of the lattice materials 310 is square. However, the cross-sectional shape of the shells 301 is not limited to square, and may be any polygonal shape, and may be, for example, triangular, rectangular, hexagonal or the like. Moreover, materials of the lattice materials 310 and the gap making posts 320 are not particularly limited; however, in a similar way to the buffer member 200, at least one selected from the group consisting of, for example, resin, metal, glass and a carbon material can be used. Methods for manufacturing the lattice materials 310 and the gap making posts 320 are not particularly limited, either; however, the lattice materials 310 and the gap making posts 320 can be obtained by being molded by using a metal mold, for example.

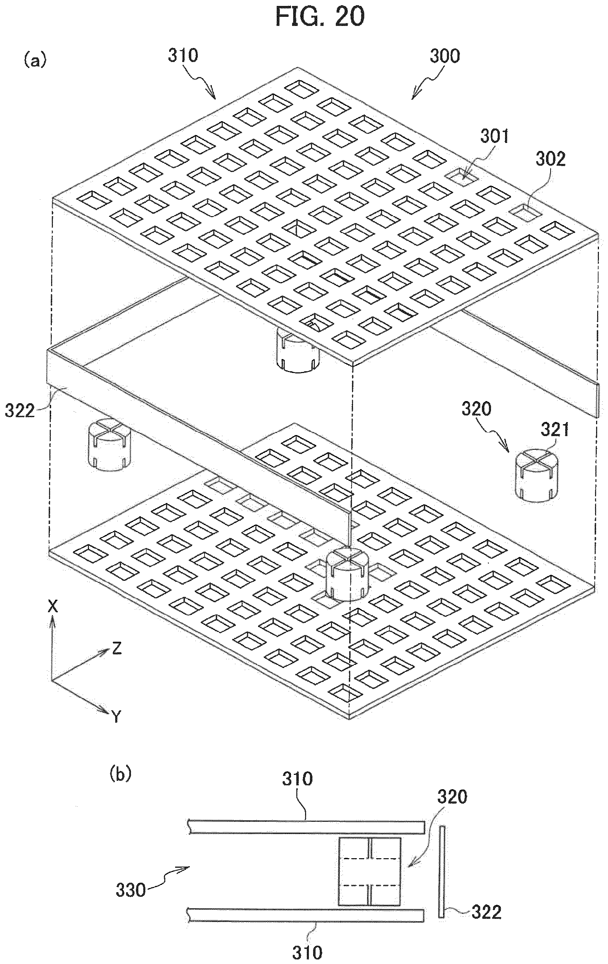

Here, as the lattice materials 310, a combination of such band plates in a lattice pattern, which are as shown in Fig. 19(a), can be used. However, the lattice materials 310 are not limited to those shown in Figs. 19(a) and 19(b), and for example, as shown in Fig. 20(a), mesh members can also be used, in which meshes are formed by combining warp yarns and weft yarns with each other in a lattice pattern. Even when such mesh members having sufficient in-plane rigidity to withstand the water pressure is used, and the air permeability is ensured by using the gap making posts 320, then the electrodes 30 are supported by the shell walls 302 and the gap making posts 320. Therefore, the electrodes 30 are suppressed from being bent to the inner space of the hollow member 10.

In Fig. 19(a), a cross-shaped groove portion 321 is formed in each of the gap making posts 320. However, when a thickness of the shell walls 302 is larger than a width of the groove portions 321, the shell walls 302 cannot be inserted into the groove portions 321, and accordingly, as shown in Fig. 19 (b), it is preferable to join the shell walls 302 and the gap making posts 320 to each other. A joining method is not particularly limited, and the shell walls 302 and the gap making posts 320 can be joined to each other by welding or pressure joining when the lattice materials 310 and the gap making posts 320 are made of resin. Moreover, the lattice materials 310 and the gap making posts 320 may be joined to each other by using an adhesive or the like.

A material of the mesh members is not particularly limited; however, there is usable at least one selected from the group consisting of, for example, resin, metal, glass and a carbon material, which have rigidity enough to withstand the water pressure. Moreover, as the resin, at least one selected from the group consisting of polystyrene, polyethylene, polypropylene, polyvinyl chloride and polycarbonate is usable. Moreover, as the metal, at least either one of stainless steel and aluminum is usable. As the mesh members, for example, Tricalnet (registered trademark) made by Takiron Co., Ltd. can be used.

### (Embodiment 3)

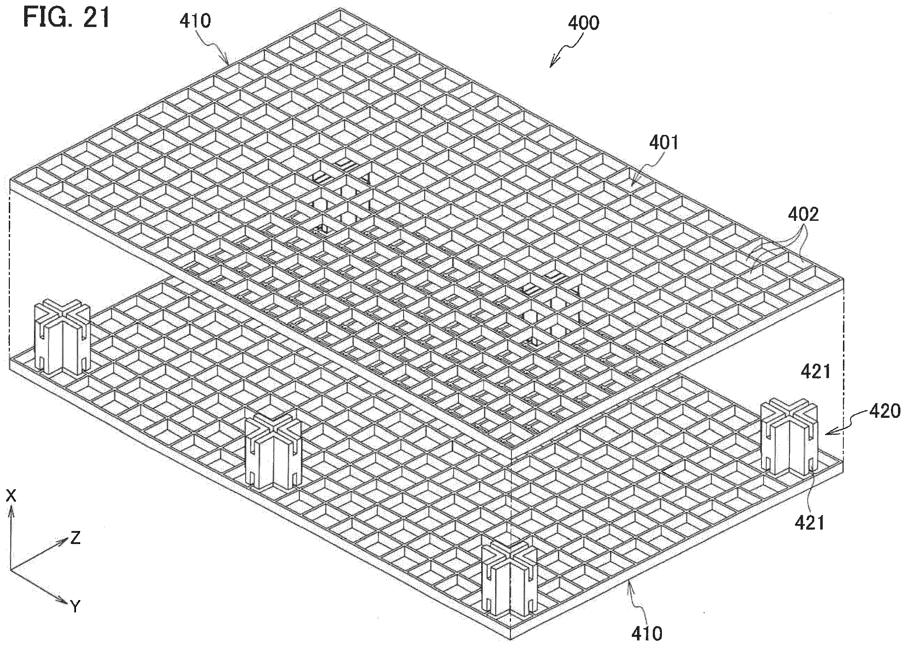

FIG. 21 shows a buffer member 400 according to Embodiment 3 in an exploded state. The buffer member 400 includes a plurality of minute shells 401 in a similar way to Embodiment 1 and Embodiment 2. Each of the shells 401 is formed by being surrounded by shell walls 402, and further, is pierced so that air can flow along the lamination direction X of the hollow member 10 and the electrodes 30. Then, a cross-sectional shape of the shell 401 when viewed from the lamination direction X is substantially square. Note that, in a similar way to Embodiment 2, such ventilation holes which allow air to flow between the shells 401 adjacent to one another are not formed in the shell walls 402.

As shown in Fig. 21, the buffer member 400 includes two lattice materials 410 in which a plurality of the shell walls 402 are arranged in a lattice pattern. Then, in a similar way to Embodiment 2, the two lattice materials 410 are fixed while providing a constant gap therebetween by interposing a plurality of gap making posts 420 therebetween. Each of the gap making posts 420 is composed of a columnar member in which a cross-sectional shape along the YZ plane is cross-shaped. Then, cross-shaped groove portions 421 are formed on both sides of the gap making posts 420 so that intersecting portions of the shell walls 402 of the lattice materials 410 can be inserted thereinto. Therefore, the shell walls 402 of the lattice materials 410 are inserted into the groove portions 421 of the gap making posts 420, whereby the two lattice materials 410 can be fixed to each other with the constant gap.

When the electrode assembly is formed by using such a buffer member 400, faces of the shell walls 402, which are opposed to each of the electrodes 30, support the electrode 30 from the inside of the hollow portion 1. Therefore, even if the electrode assembly is immersed in the electrolysis solution, and a water pressure is applied to the electrode 30, the electrode 30 is suppressed from being bent to the inner space of the hollow member 10 since the electrode 30 is supported by the shell walls 402 and the gap making posts 420 in the buffer member 400. As a result, the air permeability from the oxygen supply portion 4 of the hollow member 10 to the oxygen permeable portion 5 thereof is sufficiently ensured, and accordingly, it becomes possible to enhance the oxygen supply capability to the water-repellent layer 31.

Moreover, in the buffer member 400 of Embodiment 3, the gap is provided between the two lattice materials 410. That is, it is necessary for the buffer member 400 to ensure the air permeability from the oxygen supply portion 4 to the oxygen permeable portion 5 in a state where the gap making posts 420 are mounted between the two lattice materials 410. Therefore, the gap is provided between the two lattice materials 410 by the plurality of gap making posts 420. As a result, the air supplied from the oxygen supply portion 4 of the hollow member 10 passes through the gap and the shells 401 and reaches the oxygen permeable portion 5, and accordingly, air can be efficiently supplied to each of the electrodes 30.

In a similar way to Embodiment 2, the cross-sectional shape of the shells 401 in the lattice materials 410 is not limited to square, and may be any polygonal shape, and may be, for example, triangular, rectangular, hexagonal or the like. Moreover, in the lattice materials 410, an area of each of the shells 401 when viewed from the lamination direction X of the hollow member 10 and the electrodes 30 is not particularly limited, either, and the area of the shell 401 can be set to any size so as to have durability against the water pressure. Furthermore, materials of the lattice materials 410 and the gap making posts 420 are not particularly limited, either; however, in a similar way to Embodiment 2, at least one selected from the group consisting of, for example, resin, metal, glass and a carbon material is usable.

In the buffer member 400 of Embodiment 3, the position and number of the gap making posts 420 can be set arbitrarily. For example, the required pressure resistance changes according to the depth of the electrode assembly, and accordingly, for example, the number of the gap making posts 420 can be reduced in a shallow portion, and the number of the gap making posts 420 can be increased in a deep portion.

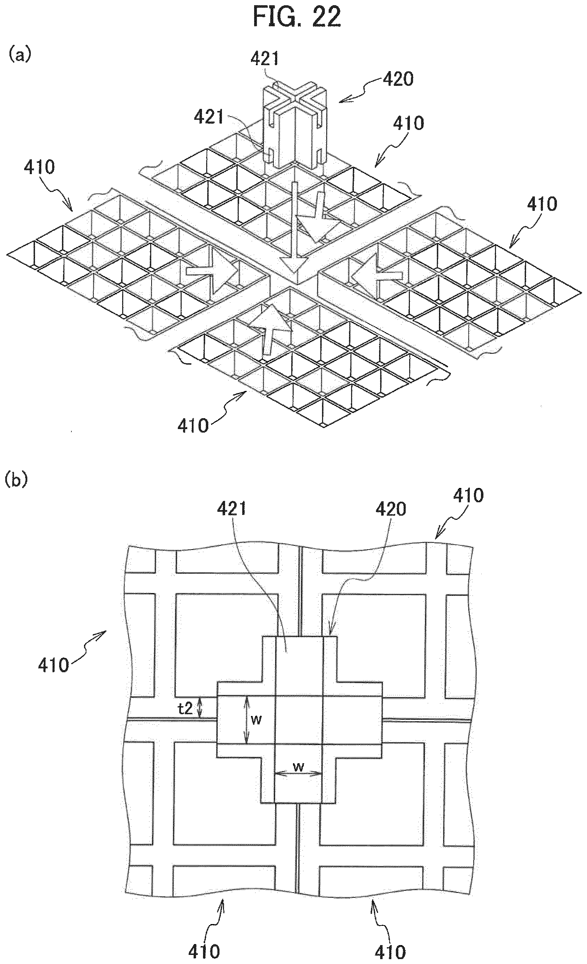

Here, each of the lattice materials 410 may be a flat plate obtained by integrating a plurality of lattice materials with one another in a state in which the plurality of lattice materials are arrayed in the YZ direction. Specifically, as shown in Fig. 22(a), when four lattice materials 410 are combined with one another, then four corners of the four lattice materials 410 are matched with one another, and thereafter, the shell walls 402 of such portions matched with one another are inserted into the groove portions 421 of the gap making posts 420. In this way, the four lattice materials 410 can be fixed integrally with one another. Note that, as shown in Fig. 22(b), a width w of the groove portion 421 of the gap making post 420 is made slightly larger than twice a thickness t2 of the shell wall 402 in each of the lattice materials 410.

Moreover, also in such a case of combining two lattice materials 410 with each other, two sides of the two lattice materials 410 are arrayed in line, and thereafter, the shell walls 402 are inserted into the groove portions 421 of the gap making posts 420, whereby the two lattice materials 410 can be fixed integrally with each other. Then, such lattice materials thus integrated by using the gap making posts 420 are laminated on each other via the gap making posts 420 as shown in Fig. 21, whereby the buffer member 400 can be obtained.

As described above, in Embodiment 3, the plurality of lattice materials 410 can be integrated with one another in such a state of being arrayed in the YZ direction. Therefore, it is sufficient that the lattice materials 410 are combined with one another according to the size of the hollow portion 1 of the hollow member 10, and accordingly, the buffer member 400 can be formed into a module. That is, for example, when the area of the oxygen permeable portion 5 in the hollow portion 1 of the hollow member 10 exceeds 1 m², if two single buffer members 410 are laminated on one another to obtain the buffer member 400, then lattice materials having an area exceeding 1 m² must be prepared, and the manufacturing process becomes complicated. In contrast, when the plurality of lattice materials 410 are combined with one another in accordance with the size of the hollow portion 1 of the hollow member 10, then it is not necessary to prepare large lattice materials, and accordingly, the manufacturing process can be simplified.

### (Embodiment 4)

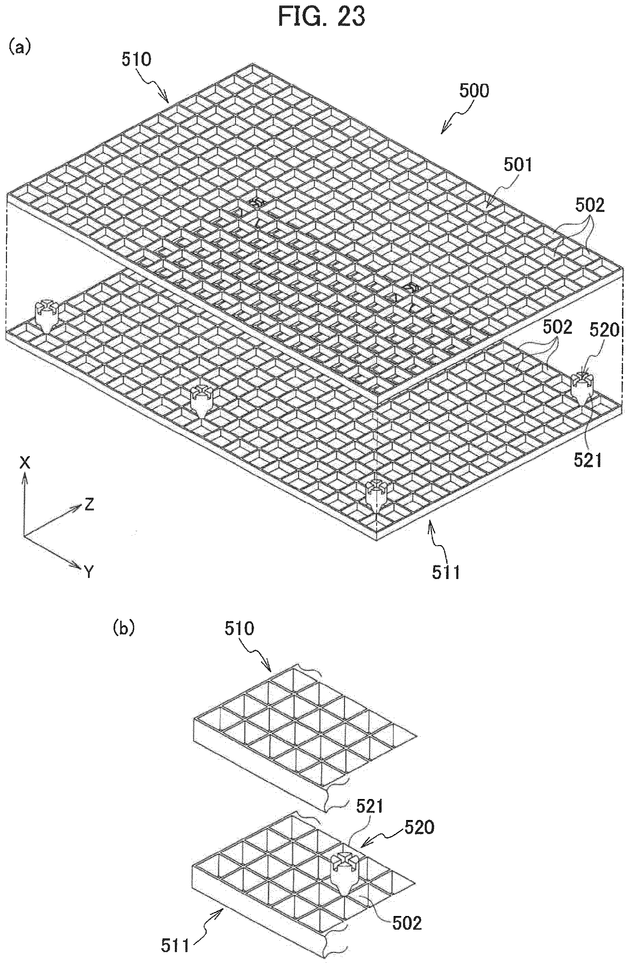

FIG. 23 shows a buffer member 500 according to Embodiment 4 in an exploded state. The buffer member 500 includes a plurality of minute shells 501 in a similar way to Embodiments 1 to 3. Each of the shells 501 is formed by being surrounded by shell walls 502, and further, is pierced so that air can flow along the lamination direction X of the hollow member 10 and the electrodes 30. Then, a cross-sectional shape of the shell 501 when viewed from the lamination direction X is substantially square. Note that, in a similar way to Embodiments 2 and 3, such ventilation holes which allow air to flow between the shells 501 adjacent to one another are not formed in the shell walls 502.

As shown in Fig. 23(a), the buffer member 500 includes two lattice materials 510 and 511 in which a plurality of the shell walls 502 are arranged in a lattice pattern. Then, in a similar way to Embodiments 2 and 3, the two lattice materials 510 and 511 are fixed while providing a constant gap therebetween by interposing a plurality of gap making posts 520 therebetween.

In Embodiment 4, the gap making posts 520 are formed integrally with the lattice materials 511. Specifically, as shown in Fig. 23(b), each of the gap making posts 520 has a cross-shaped groove portion 521 into which the shell walls 502 of the lattice material 510 are inserted. Then, a portion of the gap making post 520, in which the groove portion 521 is provided, has a columnar shape. The gap making post 520 is gradually reduced in diameter as approaching the lattice material 511, and a portion of the gap making post 520, which is reduced most in diameter, is joined to the shell walls 502 of the lattice material 511. Then, the shell walls 502 of the lattice material 510 are inserted into the groove portions 521 of the gap making posts 520, whereby the two lattice materials 510 and 511 can be fixed to each other with the constant gap.

In a similar way to Embodiments 2 and 3, the cross-sectional shape of the shells 501 in the lattice materials 510 and 511 is not limited to square, and may be any polygonal shape, and may be, for example, triangular, rectangular, hexagonal or the like. Moreover, in the lattice materials 510 and 511, an area of each of the shells 501 when viewed from the lamination direction X of the hollow member 10 and the electrodes 30 is not particularly limited, either, and the area of the shell 501 can be set to any size so as to have durability against the water pressure. Furthermore, materials of the lattice materials 510 and 511 and the gap making posts 520 are not particularly limited, either; however, in a similar way to Embodiments 2 and 3, at least one selected from the group consisting of, for example, resin, metal, glass and a carbon material is usable.

When the electrode assembly is formed by using such a buffer member 500, faces of the shell walls 502, which are opposed to each of the electrodes 30, support the electrode 30 from the inside of the hollow portion 1. Therefore, even if the electrode assembly is immersed in the electrolysis solution, and a water pressure is applied to the electrode 30, the electrode 30 is suppressed from being bent to the inner space of the hollow member 10 since the electrode 30 is supported by the shell walls 502 and the gap making posts 520 in the buffer member 500. As a result, the air permeability from the oxygen supply portion 4 of the hollow member 10 to the oxygen permeable portion 5 thereof is sufficiently ensured, and accordingly, it becomes possible to enhance an oxygen supply capability to the water-repellent layer 31 of the electrode 30. Moreover, in the buffer member 500 of Embodiment 4, the gap is provided between the two lattice materials 510 and 511. Therefore, the air supplied from the oxygen supply portion 4 of the hollow member 10 passes through the gap and the shells 501 and reaches the oxygen permeable portion 5, and accordingly, air can be efficiently supplied to each of the electrodes 30.

In Embodiment 4, the gap making posts 520 are not integrally formed on the lattice material 510, but the gap making posts 520 are integrally formed on the lattice material 511. Therefore, it becomes possible to reduce the number of parts, and to simplify the assembling process of the buffer member 500. Moreover, if a gap is formed on a surface of each of the gap making posts 520, on which the groove portion 521 is formed so as to guide the shell wall 502 of the lattice material 510, it is also possible to have a positioning function of the lattice materials 510 and 511 at the same time. Note that such a method for manufacturing the lattice materials 510 and 511 is not particularly limited; however, the lattice materials 510 and 511 can be obtained by being molded by using a metal mold, for example.

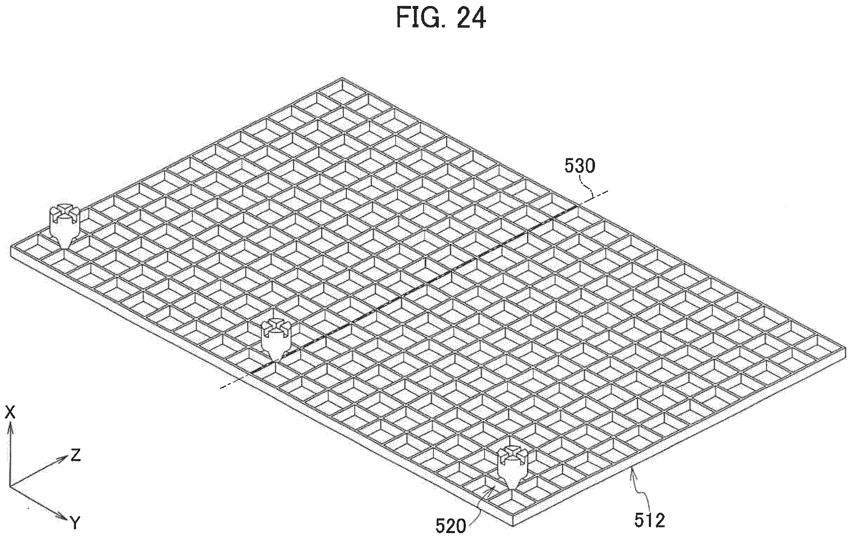

Here, in the buffer member 500 shown in Fig. 23, it is necessary to fabricate two types of parts, which are: the lattice material 510 that does not have the gap making posts 520; and the lattice material 511 with which the gap making posts 520 are integrally molded. However, as shown in Fig. 24, for example, the gap making posts 520 are integrally molded on one face of a lattice material 512 so as to be axisymmetric about a symmetry axis 530 taken as an axis. Then, two lattice materials 512 are laminated on each other so that the gap making posts 520 can be disposed on an inner side thereof, whereby such a buffer member 500 similar to that in Fig. 23 can be obtained. In this case, since the buffer member is obtained by overlapping two pieces of the single-type lattice materials 512, types of the parts can be reduced. Moreover, since only one type of a metal mold for forming the lattice material 512 is sufficient, manufacturing cost can also be reduced.

Note that, in this specification, the support members compose a part of the buffer member. Therefore, as long as a space for sufficiently supplying oxygen to the positive electrode is ensured, the buffer member may be composed only of the support members.

The electrode assembly of the present invention includes the buffer member in the inside of the hollow member. Therefore, even in a high water pressure environment, since the space for sufficiently supplying oxygen to the positive electrode is ensured, it becomes possible to stably produce electrical energy by suppressing the deterioration of the battery characteristics.

### REFERENCE SIGNS LIST

- 1: Hollow portion
- 4: Oxygen supply portion
- 5: Oxygen permeable portion
- 10, 10A, 10B, 10C: Hollow member
- 20, 200, 200A, 300, 400, 500: Buffer member
- 22d: Cylindrical member
- 30: Electrode
- 31: Water-repellent layer
- 32: Electrically conductive layer
- 33: Oxygen permeable layer
- 40: Negative electrode
- 50: Ion transfer layer
- 60: Positive electrode
- 81: Electrolysis solution
- 100, 100A, 100B, 100C, 100D, 100E: Electrode assembly
- 110: Microbial fuel cell

## Claims

1. An electrode assembly comprising:
a hollow member (10, 10A, 10B, 10C) having a hollow portion (1), an oxygen supply portion (4) that supplies oxygen to the hollow portion (1), and an oxygen permeable portion (5) that allows permeation of oxygen supplied to the hollow portion (1);
an electrode (30) that is provided on an outside of the hollow member (10, 10A, 10B, 10C) in the oxygen permeable portion (5) and is composed by laminating a water-repellent layer (31) and an electrically conductive layer (32) on each other from the oxygen permeable portion (5) side, the water-repellent layer (31) having oxygen permeability; and
a buffer member (20, 200, 200A, 300, 400, 500) that is provided in the hollow portion (1) and has pressure resistance,
wherein air permeability is provided from the oxygen supply portion (4) to the oxygen permeable portion (5).

2. The electrode assembly according to claim 1, wherein ISO air permeance from the oxygen supply portion (4) to the oxygen permeable portion (5) is 1×10⁻⁵ µm/Pa·s to 100 µm/Pa·s.

3. The electrode assembly according to claim 1 or 2, wherein compressive strength of a sidewall in the buffer member, on which the electrode (30) is laminated, is 0.01 kgf/cm² to 10 kgf/cm².

4. The electrode assembly according to any one of claims 1 to 3, wherein the hollow member (10) has a rectangular parallelepiped shape, and the oxygen supply portion (4) is an opening portion provided on one face of the hollow member (10).

5. The electrode assembly according to any one of claims 1 to 3, wherein the hollow member (10C) has a cylindrical shape, and the oxygen supply portion (4) is an opening portion provided on one face of the hollow member (10C).

6. The electrode assembly according to claim 4 or 5, wherein the buffer member (20, 200, 200A, 300, 400, 500) includes one or two or more cylindrical members (22d).

7. The electrode assembly according to claim 4, wherein the buffer member (20, 200, 200A, 300, 400, 500) includes a plate member in an inside thereof, and
a cross-sectional shape of the buffer member (20, 200, 200A, 300, 400, 500) along a lamination direction of the hollow member (10, 10A, 10B, 10C) and the electrode (30) is corrugated.

8. The electrode assembly according to claim 4, wherein the buffer member (20, 200, 200A, 300, 400, 500) includes a plate member in an inside thereof, and
a cross-sectional shape of the buffer member (20, 200, 200A, 300, 400, 500) along a lamination direction of the hollow member (10, 10A, 10B, 10C) and the electrode (30) is truss-like.

9. The electrode assembly according to any one of claims 1 to 8, wherein the electrode (30) further includes an oxygen permeable layer (33) that is disposed between the water-repellent layer (31) and the electrically conductive layer (32) and has oxygen permeability.

10. A microbial fuel cell comprising:
the electrode assembly (100, 100A, 100B, 100C, 100D, 100E) according to any one of claims 1 to 9; and
a negative electrode (40) that supports microorganisms,
wherein the electrode (30) in the electrode assembly (100, 100A, 100B, 100C, 100D, 100E) is a positive electrode (60).

11. The microbial fuel cell according to claim 10, further comprising: an ion transfer layer (50) that is provided between the electrode (30) in the electrode assembly (100, 100A, 100B, 100C, 100D, 100E) and the negative electrode (40) and has proton permeability.

12. The microbial fuel cell according to claim 10 or 11, wherein the oxygen supply portion (4) in the electrode assembly (100, 100A, 100B, 100C, 100D, 100E) is an opening portion provided on one face of the hollow member (10, 10A, 10B, 10C), and
the electrode assembly (100, 100A, 100B, 100C, 100D, 100E) is immersed in an electrolysis solution (81) so that the opening portion can be exposed to outside air.

13. A water treatment device comprising:
the electrode assembly (100, 100A, 100B, 100C, 100D, 100E) according to any one of claims 1 to 9; and
a negative electrode (40) that supports microorganisms which purify a liquid to be treated,
wherein the electrode (30) in the electrode assembly (100, 100A, 100B, 100C, 100D, 100E) is a positive electrode (60).

## Patentansprüche

1. Elektrodenanordnung, umfassend:
ein Hohlelement (10, 10A, 10B, 10C) mit einem hohlen Bereich (1), einem Sauerstoffzufuhrbereich (4), der dem hohlen Bereich (1) Sauerstoff zuführt, und einem sauerstoffdurchlässigen Bereich (5), der die Permeation von Sauerstoff, der dem hohlen Bereich (1) zugeführt wird, ermöglicht;
eine Elektrode (30), die an einer Außenseite des Hohlelements (10, 10A, 10B, 10C) in dem sauerstoffdurchlässigen Bereich (5) bereitgestellt ist und durch aufeinander Laminieren einer wasserabweisenden Schicht (31) und einer elektrisch leitfähigen Schicht (32) von der Seite des sauerstoffdurchlässigen Bereichs (5) zusammengesetzt ist, wobei die wasserabweisende Schicht (31) Sauerstoffdurchlässigkeit aufweist; und
ein Pufferelement (20, 200, 200A, 300, 400, 500), das im hohlen Bereich (1) bereitgestellt ist und Druckfestigkeit aufweist,
wobei Luftdurchlässigkeit von dem Sauerstoffzufuhrbereich (4) zu dem sauerstoffdurchlässigen Bereich (5) bereitgestellt ist.

2. Elektrodenanordnung nach Anspruch 1, wobei ISO-Luftdurchlässigkeit von dem Sauerstoffzufuhrbereich (4) zu dem sauerstoffdurchlässigen Bereich (5) 1×10⁻⁵ µm/Pa·s bis 100 µm/Pa·s beträgt.

3. Elektrodenanordnung nach Anspruch 1 oder 2, wobei Druckfestigkeit einer Seitenwand in dem Pufferelement, auf die die Elektrode (30) laminiert ist, 0,01 kgf/cm² bis 10 kgf/cm² beträgt.

4. Elektrodenanordnung nach einem der Ansprüche 1 bis 3, wobei das Hohlelement (10) eine rechteckige Parallelepiped-Form aufweist und der Sauerstoffzufuhrbereich (4) ein Öffnungsbereich ist, der auf einer Seite des Hohlelements (10) bereitgestellt ist.

5. Elektrodenanordnung nach einem der Ansprüche 1 bis 3, wobei das Hohlelement (10C) eine zylindrische Form aufweist und der Sauerstoffzufuhrbereich (4) ein Öffnungsbereich ist, der auf einer Seite des Hohlelements (10C) bereitgestellt ist.

6. Elektrodenanordnung nach Anspruch 4 oder 5, wobei das Pufferelement (20, 200, 200A, 300, 400, 500) ein oder zwei oder mehr zylindrische Elemente (22d) beinhaltet.

7. Elektrodenanordnung nach Anspruch 4, wobei das Pufferelement (20, 200, 200A, 300, 400, 500) ein Plattenelement in seinem Inneren beinhaltet, und
eine Querschnittsform des Pufferelements (20, 200, 200A, 300, 400, 500) entlang einer Laminierrichtung des Hohlelements (10, 10A, 10B, 10C) und der Elektrode (30) gewellt ist.

8. Elektrodenanordnung nach Anspruch 4, wobei das Pufferelement (20, 200, 200A, 300, 400, 500) ein Plattenelement in seinem Inneren beinhaltet, und
eine Querschnittsform des Pufferelements (20, 200, 200A, 300, 400, 500) entlang einer Laminierrichtung des Hohlelements (10, 10A, 10B, 10C) und der Elektrode (30) traversenartig ist.

9. Elektrodenanordnung nach einem der Ansprüche 1 bis 8, wobei die Elektrode (30) weiter eine sauerstoffdurchlässige Schicht (33) beinhaltet, die zwischen der wasserabweisenden Schicht (31) und der elektrisch leitfähigen Schicht (32) angeordnet ist und Sauerstoffdurchlässigkeit aufweist.

10. Mikrobielle Brennstoffzelle, umfassend:
die Elektrodenanordnung (100, 100A, 100B, 100C, 100D, 100E) nach einem der Ansprüche 1 bis 9; und
eine negative Elektrode (40), die Mikroorganismen trägt,
wobei die Elektrode (30) in der Elektrodenanordnung (100, 100A, 100B, 100C, 100D, 100E) eine positive Elektrode (60) ist.

11. Mikrobielle Brennstoffzelle nach Anspruch 10, weiter umfassend: eine lonenübertragungsschicht (50), die zwischen der Elektrode (30) in der Elektrodenanordnung (100, 100A, 100B, 100C, 100D, 100E) und der negativen Elektrode (40) bereitgestellt ist und Protonendurchlässigkeit aufweist.

12. Mikrobielle Brennstoffzelle nach Anspruch 10 oder 11, wobei der Sauerstoffzufuhrbereich (4) in der Elektrodenanordnung (100, 100A, 100B, 100C, 100D, 100E) ein Öffnungsbereich ist, der auf einer Seite des Hohlelements (10, 10A, 10B, 10C) bereitgestellt ist, und
die Elektrodenanordnung (100, 100A, 100B, 100C, 100D, 100E) in eine Elektrolyselösung (81) eingetaucht ist, so dass der Öffnungsbereich Außenluft ausgesetzt werden kann.

13. Wasserbehandlungsvorrichtung, umfassend:
die Elektrodenanordnung (100, 100A, 100B, 100C, 100D, 100E) nach einem der Ansprüche 1 bis 9; und
eine negative Elektrode (40), die Mikroorganismen trägt, die eine zu behandelnde Flüssigkeit reinigen,
wobei die Elektrode (30) in der Elektrodenanordnung (100, 100A, 100B, 100C, 100D, 100E) eine positive Elektrode (60) ist.

## Revendications

1. Assemblage d'électrode, comprenant:
un élément creux (10, 10A, 10B, 10C) présentant une partie creuse (1), une partie d'alimentation en oxygène (4) qui fournit de l'oxygène à la partie creuse (1) et une partie perméable à l'oxygène (5) qui permet la perméation de l'oxygène fourni à la partie creuse (1);
une électrode (30) mise à disposition sur l'extérieur de l'élément creux (10, 10A, 10B, 10C) dans la partie perméable à l'oxygène (5) et qui est composée par lamination d'une couche hydrofuge (31) et d'une couche électro-conductrice (32) l'une sur l'autre à partir du côté de la partie perméable à l'oxygène (5), la couche hydrofuge (31) étant perméable à l'oxygène; et
un élément tampon (20, 200, 200A, 300, 400, 500) mis à disposition dans la partie creuse (1) et présentant une résistance à la pression,
dans lequel la perméabilité à l'air est mise à disposition à partir de la partie d'alimentation en oxygène (4) vers la partie perméable à l'oxygène (5).

2. Assemblage d'électrode selon la revendication 1, dans lequel la perméance à l'air ISO à partir de la partie d'alimentation en oxygène (4) vers la partie perméable à l'oxygène (5) est de 1x10⁻⁵ µm/Pa•s à 100 µm/Pa•s.

3. Assemblage d'électrode selon la revendication 1 ou 2, dans lequel la résistance à la compression d'une paroi latérale dans l'élément tampon, sur lequel l'électrode (30) est laminée, va de 0,01 kgf/cm² à 10 kgf/cm².

4. Assemblage d'électrode selon l'une quelconque des revendications 1 à 3, dans lequel l'élément creux (10) a une forme rectangulaire parallélépipédique et la partie d'alimentation en oxygène (4) est une partie d'ouverture mise à disposition sur une face de l'élément creux (10).

5. Assemblage d'électrode selon l'une quelconque des revendications 1 à 3, dans lequel l'élément creux (10C) a une forme cylindrique et la partie d'alimentation en oxygène (4) est une partie d'ouverture mise à disposition sur une face de l'élément creux (10C).

6. Assemblage d'électrode selon la revendication 4 ou 5, dans lequel l'élément tampon (20, 200, 200A, 300, 400, 500) comprend un ou deux ou plusieurs éléments cylindriques (22d).

7. Assemblage d'électrode selon la revendication 4, dans lequel l'élément tampon (20, 200, 200A, 300, 400, 500) comprend un élément en plaque dans l'intérieur de celui-ci, et
une forme en coupe de l'élément tampon (20, 200, 200A, 300, 400, 500) dans le sens de lamination de l'élément creux (10, 10A, 10B, 10C) et l'électrode (30) est ondulée.

8. Assemblage d'électrode selon la revendication 4, dans lequel l'élément tampon (20, 200, 200A, 300, 400, 500) comprend un élément en plaque dans l'intérieur de celui-ci, et
une forme en coupe de l'élément tampon (20, 200, 200A, 300, 400, 500) dans le sens de lamination de l'élément creux (10, 10A, 10B, 10C) et l'électrode (30) est en treillis.

9. Assemblage d'électrode selon l'une quelconque des revendications 1 à 8, dans lequel l'électrode (30) comprend en outre une couche perméable à l'oxygène (33) disposée entre la couche hydrofuge (31) et la couche électro-conductrice (32) et présente une perméabilité à l'oxygène.

10. Pile à combustible microbien comprenant:
l'assemblage d'électrode (100, 100A, 100B, 100C, 100D, 100E) selon l'une quelconque des revendications 1 à 9; et
une électrode négative (40) qui supporte des microorganismes,
dans laquelle l'électrode (30) dans l'assemblage d'électrode (100, 100A, 100B, 100C, 100D, 100E) est une électrode positive (60).

11. Pile à combustible microbien selon la revendication 10, comprenant en outre:
une couche de transfert d'ions (50) mise à disposition entre l'électrode (30) dans l'assemblage d'électrode (100, 100A, 100B, 100C, 100D, 100E) et
l'électrode négative (40) et présente une perméabilité aux protons.

12. Pile à combustible microbien selon la revendication 10 ou 11, dans laquelle la partie d'alimentation en oxygène (4) dans l'assemblage d'électrode (100, 100A, 100B, 100C, 100D, 100E) est une partie d'ouverture mise à disposition sur une face de l'élément creux (10, 10A, 10B, 10C), et
l'assemblage d'électrode (100, 100A, 100B, 100C, 100D, 100E) est immergé dans une solution d'électrolyse (81) de sorte que cette partie d'ouverture peut être exposée à l'air extérieur.

13. Appareil de traitement de l'eau comprenant:
le assemblage d'électrode (100, 100A, 100B, 100C, 100D, 100E) selon l'une quelconque des revendications 1 à 9; et
une électrode négative (40) qui supporte des microorganismes, lesquels purifient un liquide à traiter,
dans lequel l'électrode (30) dans le assemblage d'électrode (100, 100A, 100B, 100C, 100D, 100E) est une électrode positive (60).
